(19) Europäisches Patentamt / European Patent Office / Office européen des brevets

(11) **EP 4 611 292 A1**

(12) **EUROPEAN PATENT APPLICATION**

(43) Date of publication:
**03.09.2025 Bulletin 2025/36**

(21) Application number: **25160791.7**

(22) Date of filing: **28.02.2025**

(51) International Patent Classification (IPC):
**H04L 1/00** *(2006.01)* **H04W 84/12** *(2009.01)*

(52) Cooperative Patent Classification (CPC):
**H04L 1/004; H04L 1/0041; H04L 1/0057; H04L 1/0059**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2024 US 202463560191 P**
**31.07.2024 US 202418790434**

(71) Applicant: **Avago Technologies International Sales
Pte. Limited
Singapore 768923 (SG)**

(72) Inventors:
• **Pulikkoonattu, Rethnakaran**
**Irvine, 92618 (US)**
• **Erceg, Vinko**
**Irvine, 92618 (US)**

(74) Representative: **Dilg, Haeusler, Schindelmann
Patentanwaltsgesellschaft mbH
Leonrodstraße 58
80636 München (DE)**

(54) **SYSTEMS AND METHODS FOR EXTENDED LONG RANGE COMMUNICATION IN WIRELESS LOCAL AREA NETWORKS (WLANS)**

(57)   In some implementations, an apparatus (105) may include a transmitter (120) and one or more processors (2010). The one or more processors (2010) may identify a target data rate for transmitting data over a channel with a frequency bandwidth. Based at least on the target data rate, the one or more processors (2010) may select a forward error correction, FEC, code, a code rate, a modulation scheme, and a number of resource units,,Rus, within the frequency bandwidth, to transmit the data within a range of the target data rate. The one or more processors (2010) may encode, by an FEC encoder (1340), the data using the FEC code and the code rate to generate encoded data. The one or more processors (2010) may modulate the encoded data using the modulation scheme to generate modulated data. The transmitter (120) may transmit the modulated data using the number of RUs.

100

FIG. 1

EP 4 611 292 A1

Description

**Cross-Reference to Related Application**

This application claims the benefit of priority to U.S. Provisional Patent Application No. 63/560,191, filed on March 1, 2024, the disclosure of which is incorporated herein by reference in its entirety.

**Field of the Disclosure**

This disclosure generally relates to systems and methods for providing a mode to 2support PHY (physical layer) rate as low as 1Mpbs, 1.1Mbps, 1.2Mbps, 1.5Mbps, 1.7Mbps or their multiples in a wireless local area network (WLAN) to achieve extended (or enhanced) long range (ELR) communication.

**Background of the Disclosure**

The market for wireless communications devices has been growing due to increased use of portable devices, increased connectivity and data transfer between all manners of devices. Digital switching techniques have facilitated the large scale deployment of affordable, easy-to-use wireless communication networks. Wireless communication can operate in accordance with various standards, such as the IEEE 802.11x (e.g., Wi-Fi technology), Bluetooth, global system for mobile communications (GSM), code division multiple access (CDMA). Using such technologies, wireless communication devices can connect to local area networks and the internet without physical cables, communicating over radio frequencies and across various spaces and ranges.

Ultra High Reliability (UHR) is a new study group within the IEEE 802.11 working group that focuses on enhancing the reliability of Wireless Local Area Network (WLAN) connectivity. Extended (or Enhanced) Long Range (ELR) refers to communication schemes designed to extend the range and reliability of WLANs. ERL communication schemes can be implemented based on frequency domain duplication or repeating the tones with or without rotation. An orthogonal frequency division multiplexing (OFDM) channel may include a plurality of subcarriers (tones). These tones can be grouped into smaller sub-channels called Resource Units (RUs). A code rate (or coding rate) represents the ratio of useful information (data) bits to the total transmitted bits. A code rate can have a great impact on the efficiency of data transmission. For example, a modulation coding scheme (MCS) over RU26 (resource units each containing 24 data tones and 2 pilot tones, for example) can support data rates 800-900Kbps depending on cyclic prefix (CP) size. Low-density parity check (LDPC) codes can be used for designs/implementations in communication standards (e.g., IEEE 802.11bn UHR chips).

**Brief Description of the Drawings**

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

FIG. 1 is a diagram depicting an example communication environment with communication systems, according to one or more embodiments.

FIG. 2 is a schematic block diagram of a computing system, according to an embodiment.

FIG. 3 is a diagram depicting an example exponent matrix, according to one or more embodiments.

FIG. 4 is a diagram depicting example shifted identity matrices for generating a parity check matrix, according to one or more embodiments.

FIG. 5 is a diagram depicting an example parity check matrix, according to one or more embodiments.

FIG. 6 is a diagram depicting an example exponent matrix, according to one or more embodiments.

FIG. 7A, FIG. 7B, and FIG. 7C are diagrams depicting example rate matching schemes including shortening, puncturing, and repeating, respectively, according to one or more embodiments.

FIG. 8 is a diagram depicting a structure of an ELR packet and various examples of schemes for encoding, modulating and transmitting the ELR packet to obtain a target data rate, according to one or more implementations.

FIG. 9 is a diagram depicting a structure of an ELR packet and another example of schemes for encoding, modulating and transmitting the ELR packet to obtain a target data rate, according to one or more implementations.

FIG. 10 is a diagram depicting an allocation structure of resource units (RUs) in a bandwidth of 20 MHz, according to one or more implementations.

FIG. 11 is a diagram depicting a structure of repeating RUs in a bandwidth of 20 MHz, according to one or more implementations.

FIG. 12 is a diagram depicting an example encoder for encoding with a shortened LDPC code to obtain a particular code rate, according to one or more embodiments.

FIG. 13 is a diagram depicting an example encoder for encoding with a shortened LDPC code to obtain a particular code rate, according to one or more embodiments

FIG. 14 is a diagram depicting an example decoder for decoding with a shortened LDPC code according to one or more embodiments.

FIG. 15A and FIG. 15B are diagrams depicting example simulation results using a system to obtain a target data rate, according to one or more embodiments.

FIG. 16A and FIG. 16B are diagrams depicting example simulation results using a system to obtain a target data rate, according to one or more embodiments.

FIG. 17 is a flow diagram showing a process for obtaining a particular data rate using various schemes of encoding, modulation and/or transmitting, in accordance with an embodiment.

The details of various embodiments of the methods and systems are set forth in the accompanying drawings and the description below.

## Detailed Description

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a™, IEEE 802.11b™, IEEE 802.11g™, IEEE P802.11n™; IEEE P802.11ac™; and IEEE P802.11be™ through IEEE P802.11bn™ standards. Although this disclosure can reference aspects of these standard(s), the disclosure is in no way limited by these standard(s).
For purposes of reading the description of the various embodiments below, the following descriptions of the sections of the specification and their respective contents can be helpful:

- Section A describes a network environment and computing environment which can be useful for practicing embodiments described herein;

- Section B describes LDPC-based encoding/decoding systems which can be useful for practicing embodiments described herein; and

- Section C describes embodiments of systems and methods to achieve extended long range communication to provide an aggregate throughput as low as 1Mbps in a WLAN.

A. Computing and Network Environment

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

Various embodiments disclosed herein are related to one or more apparatuses, devices and/or systems, including a transmitter and/or receiver and one or more processors and that may be configured, constructed or implemented to communicate using any encoding process and techniques as defined or supported by any IEEE 801.11 standard such as 902.11n, 802.11AC, 802.11ax and 802.11be or other versions and embodiments of the IEEE 802.11 standard.

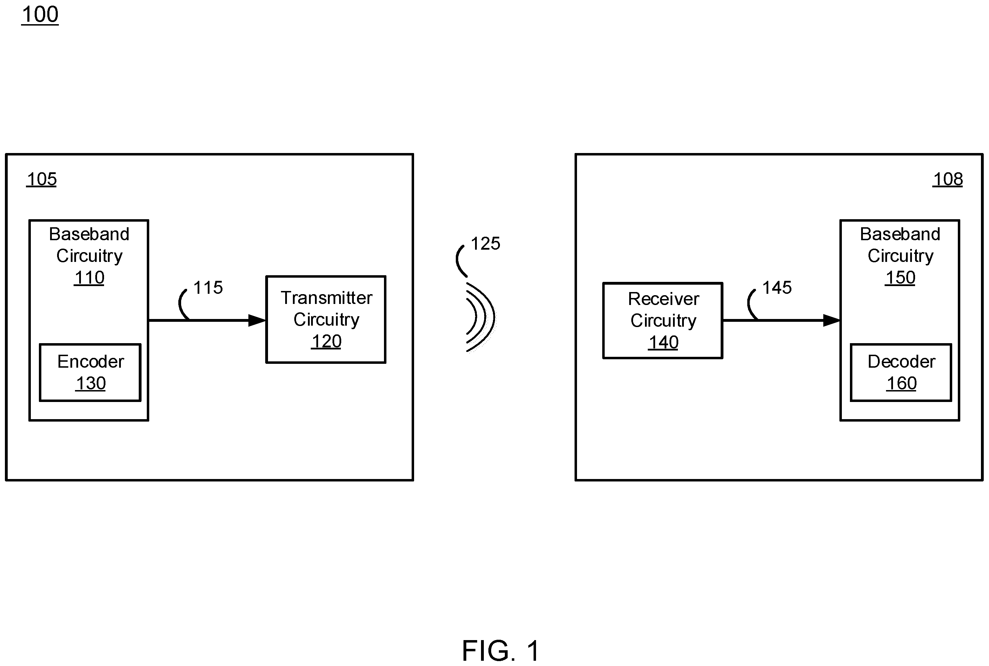

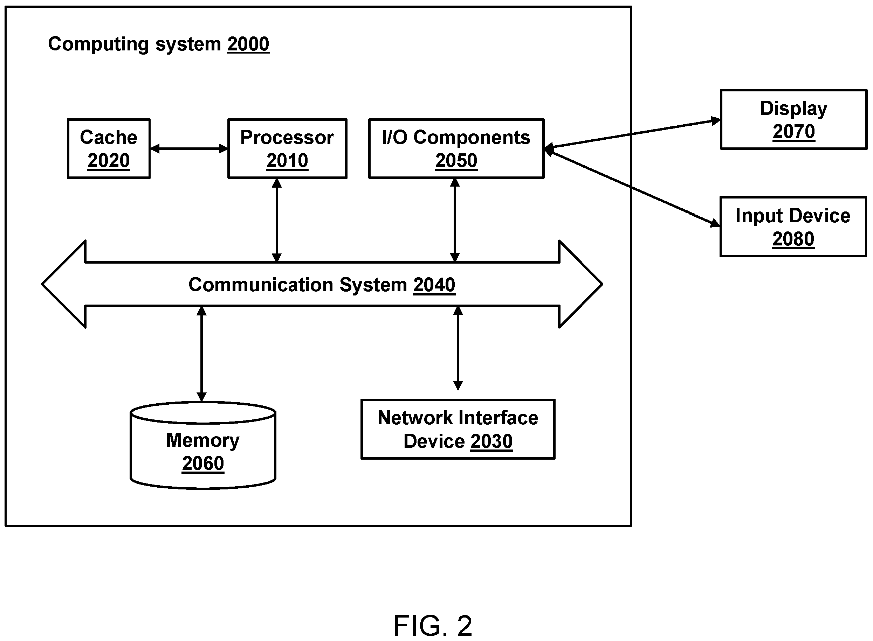

Referring to FIG. 1, illustrated is a diagram depicting an example communication environment 100 including communication systems (or communication apparatuses) 105, 108, according to one or more embodiments. In one embodiment, the communication system 105 includes a baseband circuitry 110 and a transmitter circuitry 120, and the communication system 108 includes a baseband circuitry 150 and a receiver circuitry 140. In one aspect, the communication system 105 is considered a transmitter communication system, and the communication system 108 is considered a receiver communication system. These components operate together to exchange data (e.g., messages or frames) through a wireless medium. These components are embodied as application specific integrated circuit (ASIC), field programmable gate array (FPGA), or any combination of these, in one or more embodiments. In some embodiments, the communication systems 105, 108 include more, fewer, or different components than shown in FIG. 1. For example, each of the communication systems 105, 108 includes transceiver circuitry to allow bi-directional communication between the communication systems 105, 108 or with other communication systems. In some embodiments, each of the communication systems 105, 108 may have configuration similar to that of a computing system 2000 as shown in FIG. 2.

The baseband circuitry 110 of the communication system 105 is a circuitry that generates the baseband data 115 for transmission. The baseband data 115 includes information data (e.g., signal(s)) at a baseband frequency for transmission. In one approach, the baseband circuitry 110 includes an encoder 130 that encodes the data, and generates or outputs parity bits. In one aspect, the baseband circuitry 110 (or encoder 130) obtains a generator matrix or a parity check matrix, or uses a previously produced generator matrix or a previously produced parity check matrix, and encodes the information data by applying the information data to the generator matrix or the parity check matrix to obtain a codeword. In some embodiments, the baseband circuitry 110 stores one or more generator matrices or one or more parity check matrices that conform to any IEEE 802.11 standard for WLAN communication. The baseband circuitry 110 retrieves the stored generator matrix or the stored parity check matrix in response to detecting information data to be transmitted, or in response to receiving an instruction to encode the information data. In one approach, the baseband circuitry 110 generates the parity bits according to a portion of the generator matrix or using the parity check matrix, and appends the parity bits to the information bits to form a codeword. The baseband circuitry 110 generates the baseband data 115 including the codeword for the communication system 108, and provides the baseband data 115 to the transmitter circuitry 120.

The transmitter circuitry 120 of the communication system 105 includes or corresponds to a circuitry that receives the baseband data 115 from the baseband circuitry 110 and transmits a wireless signal 125 according to the baseband data 115. In one configuration, the transmitter circuitry 120 is coupled between the baseband circuitry 110 and an antenna (not shown). In this configuration, the transmitter circuitry 120 up-converts the baseband data 115 from the baseband circuitry 110 onto a carrier signal to generate the wireless signal 125 at an RF frequency (e.g., 10 MHz to 60 GHz), and transmits the wireless signal 125 through the antenna.

The receiver circuitry 140 of the communication system 108 is a circuitry that receives the wireless signal 125 from the communication system 105 and obtains baseband data 145 from the received wireless signal 125. In one configuration, the receiver circuitry 140 is coupled between the baseband circuitry 150 and an antenna (not shown). In this configuration, the receiver circuitry 140 receives the wireless signal 125 though an antenna, and down-converts the wireless signal 125 at an RF frequency according to a carrier signal to obtain the baseband data 145 from the wireless signal 125. The receiver circuitry 140 then provides the baseband data 145 to the baseband circuitry 150.

The baseband circuitry 150 of the communication system 108 includes or corresponds to a circuitry that receives the baseband data 145 from the receiver circuitry 140 and obtains information data from the received baseband data 145. In one embodiment, the baseband circuitry 150 includes a decoder 160 that extracts information and parity bits from the baseband data 145. The decoder 160 decodes the baseband data 145 to obtain the information data generated by the baseband circuitry 110 of the communication system 105.

In some embodiments, each of the baseband circuitry 110 (including the encoder 130), the transmitter circuitry 120, the receiver circuitry 140, and the baseband circuitry 150 (including the decoder 160) may be as one or more processors, application specific integrated circuit (ASIC), field programmable gate array (FPGA), or any combination of them.

FIG. 2 is a schematic block diagram of a computing system, according to an embodiment. An illustrated example computing system 2000 includes one or more processors 2010 in direct or indirect communication, via a communication system 2040 (e.g., bus), with memory 2060, at least one network interface controller 2030 with network interface port for connection to a network (not shown), and other components, e.g., input/output ("I/O") components 2050. Generally, the processor(s) 2010 will execute instructions (or computer programs) received from memory. The processor(s) 2010 illustrated incorporate, or are connected to, cache memory 2020. In some instances, instructions are read from memory 2060 into cache memory 2020 and executed by the processor(s) 2010 from cache memory 2020. The computing system 2000 may not necessarily contain all of these components shown in FIG. 2, and may contain other components that are not shown in FIG. 2.

In more detail, the processor(s) 2010 may be any logic circuitry that processes instructions, e.g., instructions fetched from the memory 2060 or cache 2020. In many implementations, the processor(s) 2010 are microprocessor units or special purpose processors. The computing device 2050 may be based on any processor, or set of processors, capable of operating as described herein. The processor(s) 2010 may be single core or multi-core processor(s). The processor(s) 2010 may be multiple distinct processors.

The memory 2060 may be any device suitable for storing computer readable data. The memory 2060 may be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray® discs). A computing system 2000 may have any number of memory devices 2060.

The cache memory 2020 is generally a form of computer memory placed in close proximity to the processor(s) 2010 for fast read times. In some implementations, the cache memory 2020 is part of, or on the same chip as, the processor(s) 2010. In some implementations, there are multiple levels of cache 2020, e.g., L2 and L3 cache layers.

The network interface controller 2030 manages data exchanges via the network interface (sometimes referred to as network interface ports). The network interface controller 2030 handles the physical and data link layers of the OSI model for network communication. In some implementations, some of the network interface controller's tasks are handled by one or more of the processor(s) 2010. In some implementations, the network interface controller 2030 is part of a processor 2010. In some implementations, the computing system 2000 has multiple network interfaces controlled by a single controller 2030. In some implementations, the computing system 2000 has multiple network interface controllers 2030. In some implementations, each network interface is a connection point for a physical network link (e.g., a cat-5 Ethernet link). In some implementations, the network interface controller 2030 supports wireless network connections and an interface port is a wireless (e.g., radio) receiver or transmitter (e.g., for any of the IEEE 802.11 protocols, near field communication "NFC", Bluetooth, ANT, or any other wireless protocol). In some implementations, the network interface controller 2030 implements one or more network protocols such as Ethernet. Generally, a computing device 2050 exchanges data with other computing devices via physical or wireless links through a network interface. The network interface may link directly to another device or to another device via an intermediary device, e.g., a network device such as a hub, a bridge, a switch, or a router, connecting the computing device 2000 to a data network such as the Internet.

The computing system 2000 may include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components may include an I/O interface, external serial device ports, and any additional co-processors. For example, a computing system 2000 may include an interface (e.g., a universal serial bus (USB) interface) for connecting input devices, output devices, or additional memory devices (e.g., portable flash drive or external media drive). In some implementations, a computing device 2000 includes an additional device such as a co-processor, e.g., a math co-processor can assist the processor 2010 with high precision or complex calculations.

The components 2090 may be configured to connect with external media, a display 2070, an input device 2080 or any other components in the computing system 2000, or combinations thereof. The display 2070 may be a liquid crystal display (LCD), an organic light emitting diode (OLED) display, a flat panel display, a solid state display, a cathode ray tube (CRT) display, a projector, a printer or other now known or later developed display device for outputting determined information. The display 2070 may act as an interface for the user to see the functioning of the processor(s) 2010, or specifically as an interface with the software stored in the memory 2060.

The input device 2080 may be configured to allow a user to interact with any of the components of the computing system 2000. The input device 2080 may be a plurality pad, a keyboard, a cursor control device, such as a mouse, or a joystick. Also, the input device 2080 may be a remote control, touchscreen display (which may be a combination of the display 2070 and the input device 2080), or any other device operative to interact with the computing system 2000, such as any device operative to act as an interface between a user and the computing system 2000.

B. LDPC-Based Encoding/Decoding Systems

Generally, a parity check matrix for a code represents equations that determine whether errors have occurred during transmission. More formally, for all valid codewords (i.e., bits produced by the encoder with no errors), the following equation can be true:

$$Hc=0 \ldots\ldots\ldots\ldots \text{(Equation 1)}$$

In Equation 1, "H" is the parity check matrix, "c" is a codeword vector, and "0" is a vector of all zeroes. The parity check matrix, H, is one way of describing a code.

A generator matrix for a code, G, satisfies the following equation:

$$sG=c \ldots\ldots\ldots\ldots \text{(Equation 2)}$$

In Equation 2, "s" is a vector of information bits, "G" is a generator matrix and "c" is the codeword that corresponds to "s." In some implementations, a system (e.g., a communication system 108 including a decoder 160 in FIG. 1) can decode the codeword c to obtain the decoded data s using Equation 2.

The parity check and generator matrices for a code are related per the above matrix equations. Generally, if a parity check matrix is low density, the corresponding generator matrix will be high density, and vice versa. LCPC codes are accordingly characterized by low density parity check matrices and high density generator matrices. The density of a matrix relates to the number of operations that must be performed to implement one of the above equations. Although it was recognized by 1995 that LDPC codes could be used to transmit data with very few errors, i.e., with error rates as good or better than turbo codes, one disadvantage of LDPC codes is that their generator matrices were high density and that made encoding computationally intensive, rending the codes impractical for many applications.

In some implementations, a parity check matrix may have a quasi-cyclic structure, for example, a parity check matrix for QC-LDPC code (n=3888, k=2916, R=3/4). Given a lifting size z, the parity check matrix may have a plurality of sub-matrices such that each submatrix is cyclically shifted version of an identity matrix of size (z x z), where z=162, for example. A parity check matrix can be represented in two equivalent forms: (1) parity check matrix H and (2) a block matrix or an exponent matrix P=E(H).

In some implementations, a parity check matrix H may be a binary matrix whose size is m x n (each of m and n is an integer). Elements of the parity check matrix are binary values. Given a block length n and a code rate R, an LDPC code (or QC-LDPC code) LDPC (n, R) satisfies the following equations:

$$k=nR \ldots\ldots\ldots\ldots \text{(Equation 3)}$$

$$m=n(1-R) \ldots\ldots\ldots\ldots \text{(Equation 4)}$$

In some implementations, a block matrix or an exponent matrix (QC-LDPC exponent matrix) may be obtained. Given a lifting size z, the exponent matrix P=E(H) may have a size of m/z x n/z. If n=24z (e.g., n=3888, z=162), then the size of P=E(H) is 24(1-R) x 24 (= n(1-R)/z x n/z). Elements of the exponent matrix may be integer values which correspond to cyclic shift values of identity matrix of size z x z. A parity check matrix H may be a sparse binary matrix that can be derived from an exponent matrix P=E(H). The generator matrix G may have a size n x k in binary form (e.g., elements of the generator matrix G are binary values). The exponent matrix P=E(H) may have a structure including a plurality of sub-matrices (e.g., A, B, C, D, E, T).

In some implementations, a binary QC-LDPC code LDPC (n, R) may be characterized by the null space of an n(1-R)×n parity check matrix H. The parity check matrix H may be a binary sparse matrix which includes a set of circulant matrices of size z x z. The parity-check matrix H of a QC-LDPC code can be represented equivalently by an exponent matrix P=E(H). This representation can help to illustrate the graphical structure of the underlying code as a base graph along with coefficient of shifting.

In some implementations, a parity check matrix H may be generated from an exponent matrix P=E(H). The exponent matrix P=E(H) may include (as elements) shift values d in the range $0<=d<z$ along with d=-1. For example, if z=7, the shift values d may include -1, 0, 1, 2, 3, 4, 5, 6. The shift value d=0 may correspond (or map) to an identity matrix of size z x z, denoted by I(z). The shift value d=-1 may correspond (or map) to a null matrix (all elements zero) of size z x z, denoted by 0*I(z). Any other integer value d in [1,z-1] may correspond (or map) to a matrix cyclically right shifted from I(z). The parity check matrix H can be obtained from the exponent matrix P=E(H) by expanding the exponent matrix P such that each element of the exponent matrix P (as a shift value d) is replaced by a matrix corresponding to the shift value.

In some implementations, the exponent matrix P=E(H) may include a plurality of elements P1,1, P1,2, P1,3, ..., P1,ń; P2,1, P2,2, P2,3, ..., P2,ń; ..., P1,1, P1,2, P1,3, ..., Pḿ,ń, which correspond to (ḿ x ń) values where ḿ and ń satisfy the following equations:

$$\acute{m} = n(1-R)/z \ldots\ldots\ldots\ldots \text{ (Equation 5)}$$

$$\acute{n} = n/z \ldots\ldots\ldots\ldots \text{ (Equation 6)}$$

The exponent matrix (or permutation matrix) P=E(H) may be expressed as following:

$$P \equiv E(H) = \begin{pmatrix} P_{1,1} & P_{1,2} & P_{1,3} & \cdots & \cdots & P_{1,\acute{n}} \\ P_{2,1} & P_{2,2} & P_{2,3} & \cdots & \cdots & P_{2,\acute{n}} \\ \cdots & \ddots & \ddots & \cdots & \cdots & \vdots \\ P_{\acute{m},1} & P_{\acute{m},2} & P_{\acute{m},3} & \cdots & \cdots & P_{\acute{m},\acute{n}} \end{pmatrix} \ldots\ldots\ldots\ldots$$

(Equation 7)

The corresponding parity check matrix H may be obtained by replacing each element of the matrix (as a shift value d) by a matrix C(d) corresponding to the shift value as follows:

$$H = \begin{pmatrix} C\,(P_{1,1}) & C\,(P_{1,2}) & C\,(P_{1,3}) & \cdots & \cdots & C\,(P_{1,\acute{n}}) \\ C\,(P_{2,1}) & C\,(P_{2,2}) & C\,(P_{2,3}) & \cdots & \cdots & C\,(P_{2,\acute{n}}) \\ \cdots & \ddots & \ddots & \cdots & \cdots & \vdots \\ C\,(P_{\acute{m},1}) & C\,(P_{\acute{m},2}) & C\,(P_{\acute{m},3}) & \cdots & \cdots & C\,(P_{\acute{m},\acute{n}}) \end{pmatrix} \ldots\ldots\ldots\ldots \text{ (Equation 8)}$$

For example, a matrix C(1) may be expressed as follows:

$$C(1) = \begin{pmatrix} 0 & 1 & 0 & \cdots & \cdots & 0 \\ 0 & 0 & 1 & \cdots & \cdots & \ddots \\ \ddots & \ddots & \ddots & \cdots & \cdots & \vdots \\ 0 & 0 & 0 & \cdots & \cdots & 1 \\ 1 & 0 & 0 & \cdots & \cdots & 0 \end{pmatrix} \ldots\ldots\ldots\ldots \text{ (Equation 9)}$$

In some implementations, an encoder can produce codewords using a generator matrix (e.g., using Equation 2). In some implementations, an encoder can use the parity check matrix (rather than the generator matrix) to produce codewords from vectors of information bits. After a parity check matrix H is obtained, the parity check matrix H may have sub-matrices A, B, C, D, T, E. An upper area O of the sub-matrix T may correspond to an area in which the matrix contains all zeroes, and the other areas may represent locations that can contain ones.

In some implementations, the codeword c can be obtained by the following expression:

$$c = [s\ p1\ p2] \ldots\ldots\ldots\ldots \text{ (Equation 10),}$$

where "s" is the vector of information bits to be encoded, "$\mathbf{p_1}$" is a vector of the first g parity bits and "$\mathbf{p_2}$" is a vector of the remaining m-g parity bits.

The vectors p1 and p2 can be obtained by the following equations:

$$\Phi = -\mathrm{ET^{-1}B+D} \ldots\ldots\ldots \text{(Equation 11);}$$

$$p_1{}^T = -\Phi^{-1} \left(-\mathrm{ET^{-1}A+C}\right) s^T \ldots\ldots\ldots \text{(Equation 12);}$$

and

$$p_2{}^T = -\mathrm{T^{-1}} \left(\mathrm{As^T+B}p_1{}^T\right) \ldots\ldots\ldots \text{(Equation 13).}$$

Although various embodiments disclosed herein are described for encoding data for a wireless communication (e.g., wireless local area network (WLAN) conforming to any IEEE 802.11 standard), principles disclosed herein are applicable to other types of communication (e.g., wired communication) or any process that performs encoding for LDPC codes.

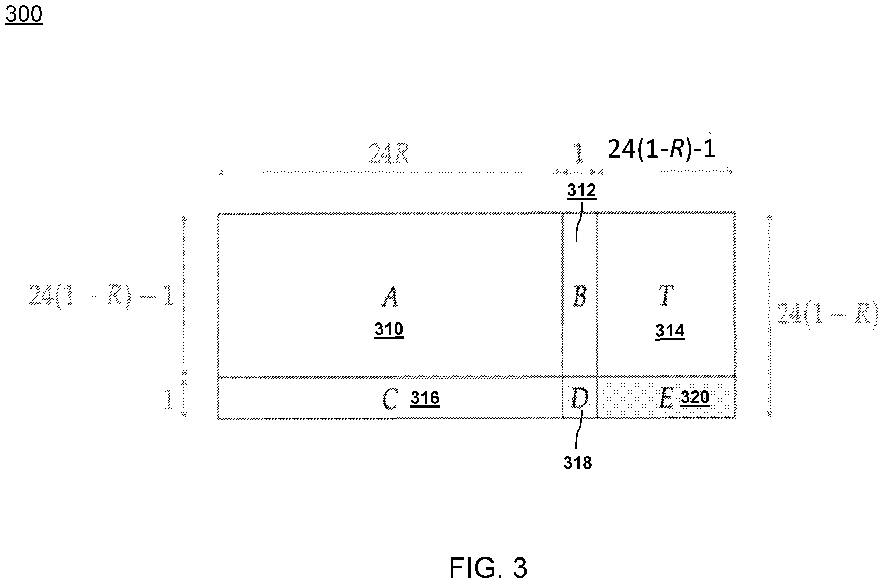

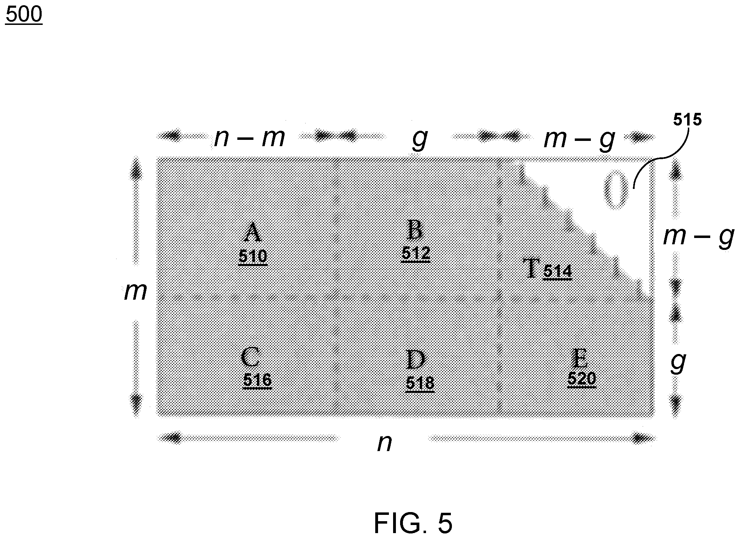

FIG. 3 is a diagram depicting an example exponent matrix (QC-LDPC exponent matrix) 300, according to one or more embodiments. Given a lifting size z, the exponent matrix 300 may have a size of m/z x n/z. If n=24z (e.g., n=3888, z=162), then the size of P=E(H) is 24(1-R) x 24 (= n(1-R)/z x n/z). Elements of the exponent matrix may be integer values which correspond to cyclic shift values of identity matrix of size z x z. A parity check matrix H (see FIG. 5) may be a sparse binary matrix that can be derived from an exponent matrix P=E(H). The generator matrix G may have a size n x k in binary form (e.g., elements of the generator matrix G are binary values). Referring to FIG. 3, the exponent matrix P=E(H) may have a structure including a plurality of sub-matrices (e.g., A 310, B 312, C 316, D 318, E 320, T 314).

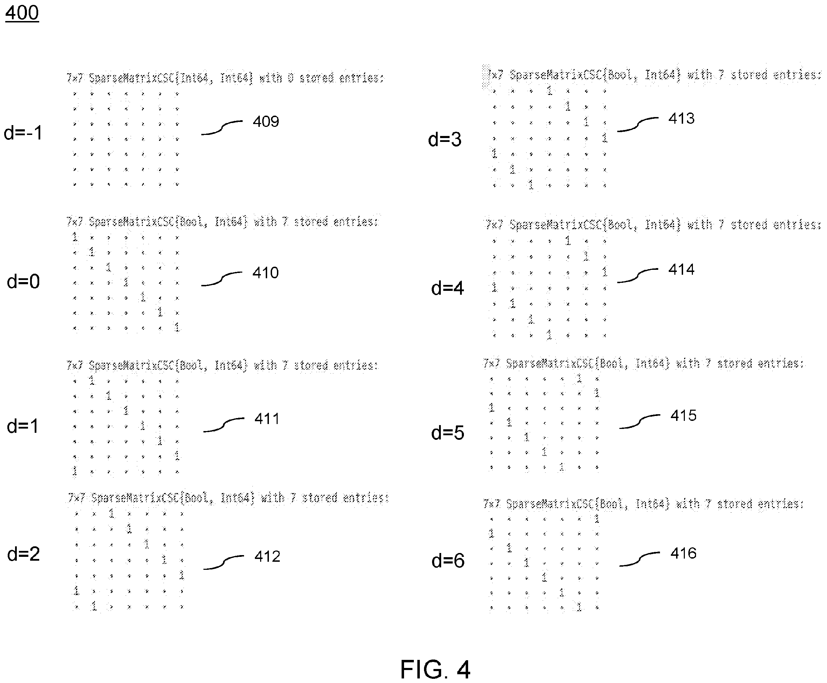

FIG. 4 is a diagram 400 depicting example shifted identity matrices 409, 410, 411, 412, 413, 414, 415, 416 for generating a parity check matrix, according to one or more embodiments. A parity check matrix H may be generated from an exponent matrix P=E(H) (e.g., exponent matrix 300) or may be identified using a codebook. As shown in Equation 7, the exponent matrix P=E(H) may include (as elements) shift values d in the range 0<=d<z along with d=-1. See Equation For example, if z=7, the shift values d may include -1, 0, 1, 2, 3, 4, 5, 6 (see FIG. 4). The shift value d=0 may correspond (or map) to an identity matrix of size z x z, denoted by I(z) (e.g., matrix 410). The shift value d=-1 may correspond (or map) to a null matrix (all elements zero) of size z x z, denoted by 0*I(z) (e.g., matrix 409). Any other integer value d in [1,z-1] may correspond (or map) to a matrix cyclically right shifted from I(z) (e.g., matrices 411, 412, 413, 414, 415, 416). As shown in Equation 8, the parity check matrix H can be obtained from the exponent matrix P=E(H) by expanding the exponent matrix P such that each element of the exponent matrix P (as a shift value d) is replaced by a matrix corresponding to the shift value.

FIG. 5 is a diagram depicting an example parity check matrix 500, according to one or more embodiments. In some implementations, an encoder (e.g., encoder 130) can produce codewords using a generator matrix (e.g., using Equation 2). In some implementations, an encoder (e.g., encoder 130) can use the parity check matrix (rather than the generator matrix) to produce codewords from vectors of information bits. After a parity check matrix H is obtained (e.g., using a codebook), the parity check matrix H (e.g., parity check matrix 500) may have sub-matrices A 510, B 512, C 516, D 518, T 514, E 520. An upper area O 515 of the sub-matrix T 514 (e.g., white area in FIG. 5) may correspond to an area in which the matrix contains all zeroes, and the other areas (e.g., grey area in FIG. 5) may represent locations that can contain ones. The size of the parity check matrix 500 may be m x n where the size of the sub-matrix D 518 is g x g, and the size of the sub-matrix T is (m-g)x(m-g). In some implementations, given a vector s of information bits to be encoded, the encoder can obtain a codeword c using Equation 10, Equation 11, Equation 12 and Equation 13.

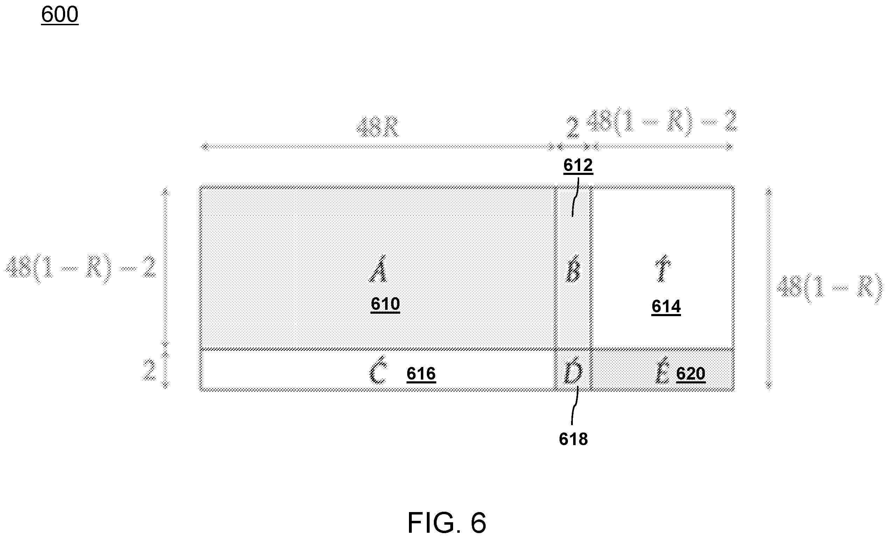

FIG. 6 is a diagram depicting an example exponent matrix (QC-LDPC exponent matrix) 600, according to one or more embodiments. Given a lifting size z, the exponent matrix 600 may have a size of m/z x n/z. If n=48z (e.g., n=3888, z=81), then the size of P=E(H) matrix for n=3888 is 48(1-R) x 48 (= n(1-R)/z x n/z). Elements of the exponent matrix may be integer values which correspond to cyclic shift values of identity matrix of size z x z. A parity check matrix H may be a sparse binary matrix that can be derived from an exponent matrix P=E(H). The generator matrix G may have a size n x k in binary form (e.g., elements of the generator matrix G are binary values). Referring to FIG. 6, the exponent matrix P=E(H) may have a structure including a plurality of sub-matrices (e.g., Á 310, B 312, Ć 316, D 318, É 320, T̈ 314).

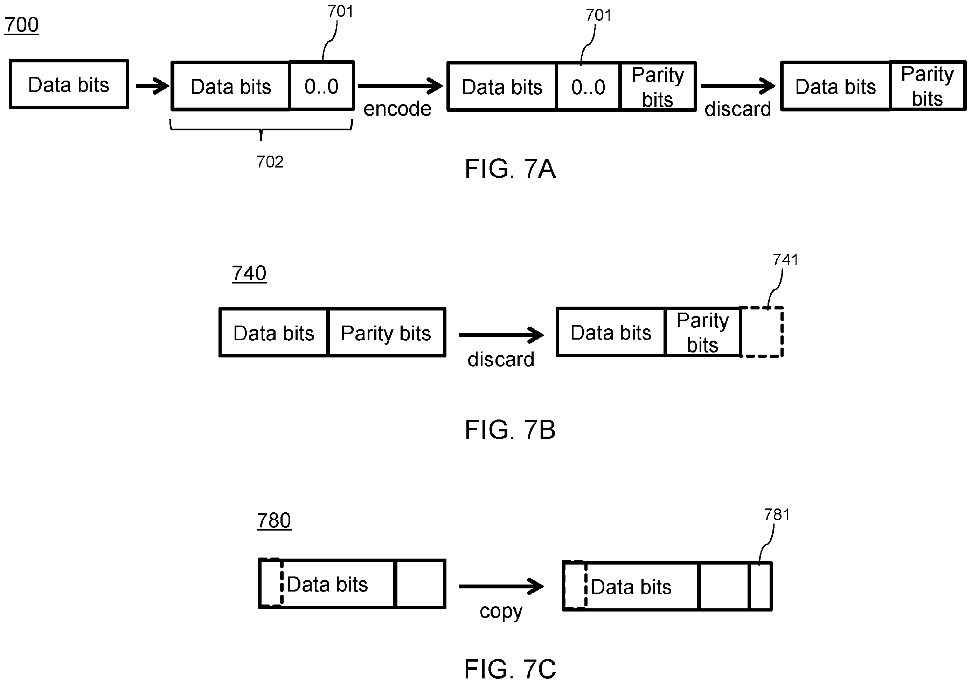

FIG. 7A, FIG. 7B, and FIG. 7C are diagrams 700, 740, 780 depicting example rate matching schemes including shortening, puncturing, and repeating, respectively, according to one or more embodiments. Referring to FIG. 4A, a system (e.g., communication system 105, baseband circuitry 110, encoder 130) may zero pad data bits (e.g., zero padded bits or "shortened bits" 701) to match the number of systematic bits per codeword (e.g., systematic bits 702) before encoding, and discard the shortened bits 701 after encoding. In this manner, the bit shortener can reduce the effective code rate and improve a coding gain.

Referring to FIG. 7B, the system may discard some parity bits (e.g., "punctured bits" 741) after encoding. In this manner, the system can increases the effective code rate and degrade a coding gain. Referring to FIG. 7C, the system may copy some bits (e.g., "repeated bits" 781) from the start of the codeword. In this manner, the system can to improves SNR.

Aspects of the operating environments and components described above will become apparent in the context of the systems and methods disclosed herein.

## C. SYSTEMS AND METHODS FOR ACHIEVING EXTENDED LONG RANGE IN WLANS

In one aspect, generally, in WLAN systems, access points (APs) transmit at higher power (using an external power amplifier) compared to non-AP stations (STAs), which typically use more efficient power amplifiers or in some cases integrated complementary metal-oxide semiconductor (CMOS) power amplifiers. This may result in a link budget difference of several dB (3-6 dB) between the downlink and uplink communications. This situation (e.g., link budget difference) may exist due to various reasons, such as increased size in AP chipsets and components (e.g., high power amplifier), which can add more sophistication compared to client devices (which are often smaller and have stricter form factor restrictions). The uplink range can be enhanced to address the imbalance in link budget between the downlink (AP to STA, e.g., router to laptop/phone) and uplink (STA to AP). Also in some countries, the regulatory allows APs to transmit significantly higher power levels and or with a higher power spectral density (dBm/MHz) than non-AP STAs, which may create an imbalance between uplink and downlinks.

To solve the problem, systems and methods of the present disclosure can implement extended long range communication to achieve an aggregate throughput in multiple of 1Mbps data rate (or multiples of 1Mpbs, 1.1Mbps, 1.2Mbps, 1.5Mbps, 1.7Mbps) in a WLAN, thereby reducing an link budget difference or an imbalance between uplink and downlinks. Here, data rate or PHY data rate refers to bit per second (bps), kilobit per second (Kbps), megabit per second (Mbps), gigabit per second (Gbps), or an amount of data transported through a network in a certain period (e.g., second). In some implementations, a system can provide a packet communication mode by which a maximum PHY data rate is substantially equal to or close to 1Mpbs, 1.1Mbps, 1.2Mbps, 1.5Mbps, 1.7Mbps or their multiples by means of 802.11 packet transmission technology.

In some implementations, in order to achieve extended (or enhanced) long range communication, communication systems in communication standards (e.g., IEEE 802.11bn UHR chips) can provide a mode to support PHY rate as low as 1Mpbs. In some implementations, a system can provide a mode to support extended range with data rates (e.g., PHY rates) as low as 1Mbps to achieve extended long range communication in WLANs (e.g., 802.11bn) and allow for the least airtime to transmit (e.g., take the least bandwidth (BW) in order to improve efficiency) and minimal processing. For example, communication systems in a WLAN (e.g., IEEE 802.11bn UHR chips) can provide a mode to support PHY rate as low as 1Mpbs. In some implementations, systems and methods can provide a mode to achieve an aggregate throughput in 1Mpbs, 1.1Mbps, 1.2Mbps, 1.5Mbps, 1.7Mbps or their multiples.

In some implementations, in order to achieve extended long range communication, systems and methods can provide two different designs/schemes/configurations depending on the forward error correction (FEC) scheme: (1) LDPC and (2) BCC (binary convolutional codes). Each of LDPC and BCC can have a corresponding code rate R. The code rate R refers to a ratio of k bits of information bits to n coded bits such that a block of k bits of information bits can be encoded to produce n coded bits (or codeword or coded block). BCC refers to an error-correcting code that generates parity symbols by applying a Boolean function (e.g., sliding Boolean polynomial function) to a data stream. For example, a BCC with a code rate (R) of 1/3 and a length (L) of 7 can generate parity symbols by applying a Boolean polynomial function represented by [171 145 133].

In some implementations, systems and methods can provide a long range transmission design/configuration/-structure with LDPC codes. The systems and methods can generate/provide/create LDPC codes with a code rate R=1/3 using quadrature phase shift keying (QPSK) as a modulation scheme. The systems and methods can use RU/dRU (distributed RU or interleaved RU) and/or LTF (long training field)/CP (cyclic prefix). In some implementations, a rotated QPSK modulation can be used with RU (e.g., RU26 containing 24 data tones and 2 pilot tones). The rotated QPSK ($\pi$/4-QPSK) modulation refers to a variation of QPSK modulation in which the constellation at each symbol is rotated by $\pi$/4 radians from the previous symbol. In some implementations, RU selection can be performed based on existing standards (e.g., the IEEE 802.11ax/be) and/or based on dRU. The systems and methods can use 4xLTF and guard interval (CP=3.2 $\mu$s). The guard interval (referred to as "GI") refers to a time interval inserted between successive symbols in a transmitted signal to mitigate the effects of multipath fading. The rate 1/3 based LDPC codes can be chosen either as a native standalone code and/or can be a derived code derived from codes with other rates. For example, from a rate 1/2 LDPC code, a system can derive/construct/create a shortened code of matching rate = 1/3. Similarly, from a low rate LDPC code such as a rate of 1/4, the system can derive/construct/create a rate 1/3 code using techniques such as puncturing.

In some implementations, systems and methods can provide a long range transmission design/configuration/-structure with BCC codes. In some implementations, the systems and methods can generate/provide/create BCC codes with a code rate R=2/3 using BPSK as a modulation scheme. RU/dRU and LTF/CP can be used similar to that used in LDPC. For example, the systems and methods can use 4xLTF and guard interval (CP=3.2 $\mu$s). In some implementations, RU selection can be performed based on existing standards (e.g., the IEEE 802.11ax/be) and/or based on dRU. In some implementations, the systems and methods can use a rate 1/3 BCC with a QPSK modulation scheme. The systems and methods can use/generate/provide/create/design 1/3 BCC codes based on existing 1/3 trellis based convolutional codes, or alternatively, by concatenating a rate 2/3 BCC code with 1/2 repetition code. The concatenation can be performed using 2/3 BCC as an inner code or as an outer code (e.g., the repetition code can swap the order in each case). If the code is used/generated/provided/created/designed as a serial concatenation, the systems and methods can optionally place an interleaver between the constituent codes.

In some implementations, when a RU26 (or 26-distributed RU or interleaved RU (26-dRU)) including 24 information tones (or data tones) and 2 pilot tones is used, a physical data rate $PHY\_RATE_{26}$ can be calculated as follows:

$$PHY\_RATE_{26}=R*\log_2M*\ 24/(4*3.2+GI) \ldots \text{Equation (14)},$$

where R refers to a code rate of an FEC scheme (e.g., LDPC or BCC); M is the number of phases used in a phase-shift keying (PSK) scheme, e.g., 2 for BPSK, 4 for QPSK, etc.; and GI is a guard interval.

When RU26s are used, the data rate $PHY\_RATE_{26}$ can be calculated using Equation 14. For example, if M=4 (QPSK), R=1/3, GI=3.2$\mu$s, then $PHY\_RATE_{26}$ =1/3*log2(4)*24/(4*3.2+3.2) = 1Mbps; if M=2 (BPSK), R=2/3, GI=3.2$\mu$s, then $PHY\_RATE_{26}$ = 2/3*log2(2)*24/(4*3.2+3.2) = 1Mbps; if M=2 (BPSK), R=2/3, GI=1.6$\mu$s, then $PHY\_RATE_{26}$ = 2/3*log2(2)*24/(4*3.2+1.6) = 1.11Mbps; if M=4 (QPSK), R=1/3, GI=1.6$\mu$s, then $PHY\_RATE_{26}$ = 1/3*log2(4) *24/(4*3.2+1.6) = 1.11Mbps; if M=2 (BPSK), R=2/3, GI=0.8$\mu$s, then $PHY\_RATE_{26}$ = 2/3*log2(2)*24/(4*3.2+0.8) = 1.176Mbps; if M=4 (QPSK), R=1/3, GI=0.8$\mu$s, then $PHY\_RATE_{26}$ =1/3*log2(4)*24/(4*3.2+0.8) = 1.176Mbps. More examples can be shown in Table 1 and Table 2 below. In some implementations, in a given PHY bandwidth (e.g., 24 MHz bandwidth), one or more such RU/dRU (e.g., RU26/26-dRU) may be repeated for additional diversity gain.

In some implementations, when a RU52 (or 52-dRU) including 48 information tones (or data tones) and 4 pilot tones is used, a physical data rate $PHY\_RATE_{52}$ can be calculated as follows:

$$PHY\_RATE_{52}=R*\log_2M*\ 48/(4*3.2+GI) \ldots \text{Equation (15)},$$

where R refers to a code rate of an FEC scheme (LDPC or BCC); M is the number of phases used in a PSK scheme, e.g., 2 for BPSK, 4 for QPSK, etc.; and GI is a guard interval.

When RU52s are used, the data rate $PHY\_RATE_{52}$ can be calculated using Equation 15. For example, if M=2 (BPSK), R=1/2, GI=3.2$\mu$s, then $PHY\_RATE_{52}$ = 1/2*log2(2)*48/(4*3.2+3.2) = 1.5Mbps; if M=2 (BPSK), R=1/2, GI=1.6$\mu$s, then $PHY\_RATE_{52}$ = 1/2*log2(2)*48/(4*3.2+1.6) = 1.67Mbps; if M=2 (BPSK), R=1/2, GI=0.8$\mu$s, then $PHY\_RATE_{52}$ = 1/2*log2(2)*48/(4*3.2+0.8) = 1.76Mbps. More examples can be shown in Table 1 and Table 2 below. In some implementations, in a given PHY bandwidth (e.g., 24 MHz bandwidth), one or more such RU/dRU (e.g., RU52/52-dRU) may be repeated for additional diversity gain.

In some implementations, systems and methods can provide a long range transmission design/configuration/-structure using multiple-input and multiple-output (MIMO) systems and/or orthogonal frequency-division multiple access (OFDMA) modulations. In some implementations, systems and methods can use MIMO optionally, or can be configured/generalized for arbitrary selection of antennas, to implement long range transmission.

In some implementations, the systems and methods can achieve the target rate of PHY rate (also referred to as "target data rate" or "target PHY rate") to be equal to 1Mbps with a 1 spatial stream (e.g., the number of spatial streams Nss=1). Here, "target data rate" or "target PHY rate" refers to a data rate or a PHY rate that is to be achieved as a result of a particular long range transmission design/configuration/structure. The target data rate or target PHY rate can be achieved based on any of the following antenna configurations: (1) 1 transmit, 1 receive antennas; (2) (Ntx, Nrx) MIMO where Ntx, Nrx refer to the number of transmit antennas and the number of receive antennas, respectively, and min (Ntx, Nrx)=1; and (3) If min (Ntx, Nrx) = d, then the achievable rate = d*1Mbps can be realized with the same design/configuration (e.g., LDPC configuration to achieve 1Mbps). For example, if a 2x4 MIMO configuration (e.g., d=2) with or without beamforming can realize 2Mbps rate.

In some implementations, the systems and methods can adjust the number of antennas to stay or remain similar to the design/configuration with LDPC or BCC. The base design/configuration can achieve 1Mbps, assumes Nss=1, which can be realized with (Ntx, Nrx) where min (Ntx, Nrx)=1. MIMO can be generalized for arbitrary selection of antennas. MIMO can provide additional diversity/combining gain depending on the configurations. For example, if a 1x2 MIMO configuration can provide 3dB, then a 1x4 MIMO configuration can provide 6dB etc.

In some implementations, the base RU can be 26 or 52 (e.g., RU26 or RU52) depending on the configuration. In a given PHY bandwidth, a number of such RUs can be repeated (e.g., in 20MHz PHY bandwidth, potentially up to 9 such RU26 can be repeated). Such repetition offers diversity gain when there is multipath fading in the channel. RU52 can be similarly repeated 2 to 4 times in 20MHz.

In some implementations, the LDPC code with a code rate R=1/3 can be a native code or can be obtained by one of the following schemes: (1) shortening from a 1/2 LDPC code; (2) concatenating a 2/3 LDPC code with repetition code of rate 1/2; (3) a blockwise repetition with a 2/3 LDPC code; (4) bit-level repetition with 2/3 LDPC coded bits with or without interleaving; or (5) 1/2 coded bits followed by a combination of shortening, repetition and puncturing to obtain an effective code rate = 1/3. In some implementations, the system can adjust the number of shortened/padding/repeated/punctured bits for a given payload length.

In some implementations, by using higher quadrature amplitude modulation (QAM), for example, as the number M in M-ary QAM increases, a proportional increase in data rate can be achieved (at the cost of higher SNR and thus reduced range). M-ary QAM refers to different constellation sizes (M) in the constellation diagram. Examples include 16-QAM, 64-QAM, and 256-QAM.

Table 1 below shows various configurations to achieve target data rates using LDPC codes.

Table 1. Summary of Configurations Using LDPC Codes

| Target Data Rate | RU/ dRU | Code Rate | Native/ Shorten /Puncture | Modulation (M) | Guard Interval (GI) | Result Data Rate |
|---|---|---|---|---|---|---|
| 1 Mbps | RU26 | 1/3 | Native | 4 (QPSK) | 3.2 | 1 Mbps |
| 1 Mbps | RU26 | 1/3 | Shortened using 2/3 code | 4 (QPSK) | 3.2 | 1 Mbps |
| 1 Mbps | RU26 | 1/3 | Punctured using 1/4 code | 4 (QPSK) | 3.2 | 1 Mbps |
| 1 Mbps | RU26 | 2/3 | Native | 2 (BPSK) | 3.2 | 1 Mbps |
| 1 Mbps | RU26 | 2/3 | Native | 2 (BPSK) | 1.6 | **1.11 Mbps** |
| 1 Mbps | RU26 | 2/3 | Native | 2 (BPSK) | 0.8 | **1.176 Mbps** |
| 1 Mbps | RU26 | 1/3 | Native | 4 (QPSK) | 1.6 | **1.11 Mbps** |
| 1 Mbps | RU26 | 1/3 | Shortened using 2/3 code | 4 (QPSK) | 1.6 | 1.11 Mbps |
| 1 Mbps | RU26 | 1/3 | Punctured using 1/4 code | 4 (QPSK) | 1.6 | 1.11 Mbps |
| 1 Mbps | RU26 | 1/3 | Native | 4 (QPSK) | 0.8 | 1.176 Mbps |
| 1 Mbps | RU26 | 1/3 | Shortened using 2/3 code | 4 (QPSK) | 0.8 | 1.176 Mbps |
| 1 Mbps | RU26 | 1/3 | Punctured using 1/4 code | 4 (QPSK) | 0.8 | 1.176 Mbps |
| 1.5 Mbps | RU52 | 1/2 | Native | 2 (BPSK) | 3.2 | 1.5 Mbps |
| 1.5 Mbps | RU52 | 1/2 | Native | 2 (BPSK) | 1.6 | 1.67 Mbps |
| 1.5 Mbps | RU52 | 1/2 | Native | 2 (BPSK) | 0.8 | 1.76 Mbps |

Table 2 below shows various configurations to achieve target data rates using BCC codes.

Table 2. Summary of Configurations Using BCC Codes

| Target Data Rate | RU/ dRU | Code Rate | Native/Repeated | Modulation (M) | Guard Interval (GI) | Result Data Rate |
|---|---|---|---|---|---|---|
| 1 Mbps | RU26 | 1/3 | Native | 4 (QPSK) | 3.2 | 1 Mbps |
| 1 Mbps | RU26 | 1/3 | A native 2/3 code concatenated with a 1/2 repetition code | 4 (QPSK) | 3.2 | 1 Mbps |
| 1 Mbps | RU26 | 2/3 | Native | 2 (BPSK) | 3.2 | 1 Mbps |
| 1 Mbps | RU26 | 2/3 | Native | 2 (BPSK) | 1.6 | 1.11 Mbps |

(continued)

| Target Data Rate | RU/ dRU | Code Rate | Native/Repeated | Modulation (M) | Guard Interval (GI) | Result Data Rate |
|---|---|---|---|---|---|---|
| 1 Mbps | RU26 | 2/3 | Native | 2 (BPSK) | 0.8 | 1.176 Mbps |
| 1 Mbps | RU26 | 1/3 | Native | 4 (QPSK) | 1.6 | 1.11 Mbps |
| 1 Mbps | RU26 | 1/3 | A native 2/3 code concatenated with a 1/2 repetition code | 4 (QPSK) | 1.6 | 1.11 Mbps |
| 1 Mbps | RU26 | 1/3 | Native | 4 (QPSK) | 0.8 | 1.176 Mbps |
| 1 Mbps | RU26 | 1/3 | A native 2/3 code concatenated with a 1/2 repetition code | 4 (QPSK) | 0.8 | 1.176 Mbps |
| 1.5 Mbps | RU52 | 1/2 | Native | 2 (BPSK) | 3.2 | 1.5 Mbps |
| 1.5 Mbps | RU52 | 1/2 | Native | 2 (BPSK) | 1.6 | 1.67 Mbps |
| 1.5 Mbps | RU52 | 1/2 | Native | 2 (BPSK) | 0.8 | 1.76 Mbps |

In some implementations, an apparatus may include a transmitter and one or more processors. The one or more processors may be configured to identify a target data rate for transmitting data over a channel with a frequency bandwidth. Based at least on the target data rate, the one or more processors may be configured to select a forward error correction (FEC) code, a code rate, a modulation scheme, and a number of resource units (RUs) within the frequency bandwidth, to transmit the data within a range of the target data rate. The one or more processors may be configured to encode, by an FEC encoder, the data using the FEC code and the code rate to generate encoded data. The one or more processors may be configured to modulate the encoded data using the modulation scheme to generate modulated data. The transmitter may be configured to transmit the modulated data using the number of RUs.

In some implementations, an apparatus may include a transmitter and one or more processors. The one or more processors may identify a target data rate for transmitting data over a channel with a frequency bandwidth. Based at least on the target data rate, the one or more processors may select a forward error correction (FEC) code, a code rate, a modulation scheme, and a number of resource units (RUs) within the frequency bandwidth, to transmit the data within a range of the target data rate. The one or more processors may encode, by an FEC encoder, the data using the FEC code and the code rate to generate encoded data. The one or more processors may modulate the encoded data using the modulation scheme to generate modulated data. The transmitter may transmit the modulated data using the number of RUs.

In some implementations, the selected FEC code may be a low density parity check (LDPC) code or a binary convolutional (BCC) code. In some implementations, based at least on the target data rate, the one or more processors are further configured to select a guard interval (GI) and a number of tones per RU, to transmit the data within a range of the target data rate. In some implementations, the target data rate may be 1 Mbps or 1.5 Mbps. The range of the target data rate may be 20% of the target data rate.

In some implementations, the FEC code may have a first code rate that is different from the selected code rate. The one or more processors may be configured to encode, by the FEC encoder, the data using the FEC code with the first code rate to generate encoded data that corresponds to the selected code rate.

In some implementations, the FEC code may be an LDPC code, the selected code rate may be 1/3, and the first code rate may be 1/2 or 1/4. In some implementations, the FEC code may be a BCC code, the selected code rate may be 1/3, and the first code rate may be 2/3.

Embodiments in the present disclosure have at least the following advantages and benefits. First, embodiments in the present disclosure can provide useful techniques for reducing an link budget difference or an imbalance between uplink and downlinks. In some implementations, a system can provide a packet communication mode by which a maximum PHY data rate is substantially equal to or close to 1Mpbs, 1.1Mbps, 1.2Mbps, 1.5Mbps, 1.7Mbps or their multiples by means of 802.11 packet transmission technology.

Second, embodiments in the present disclosure can provide useful techniques for achieving target data rates using variable schemes of encoding, modulation, and/or transmission. Table 1 and Table 2 show a summary of such schemes to achieve target data rates.

Third, embodiments in the present disclosure can provide useful techniques for reusing existing codes to help pave the way for similar design. For example, from a rate 1/2 LDPC code, a system can derive/construct/create a shortened code of matching rate = 1/3. Similarly, from a low rate LDPC code such as a rate of 1/4, the system can derive/construct/create a rate 1/3 code using techniques such as puncturing. The systems and methods can use/generate/provide/create/design 1/3 BCC codes based on existing 1/3 trellis based convolutional codes, or alternatively, by concatenating a rate 2/3 BCC code with 1/2 repetition code. The concatenation can be performed using 2/3 BCC as an inner code or as an outer code (e.g., the repetition code can swap the order in each case).

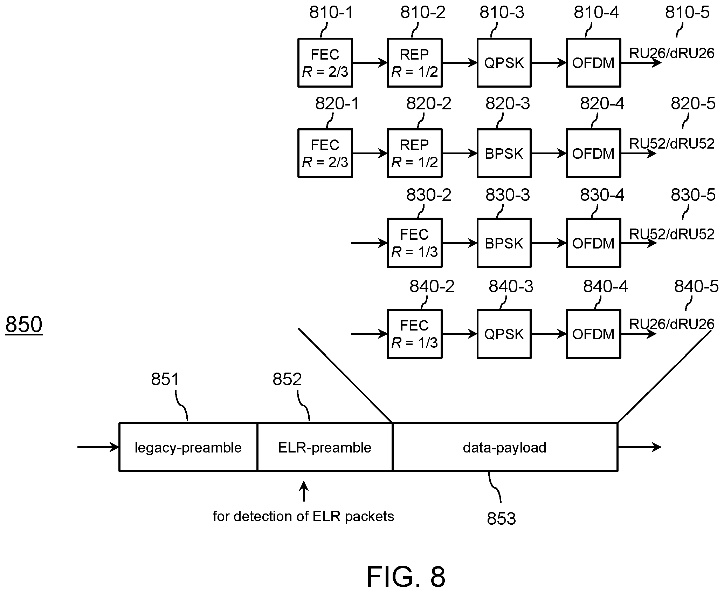

FIG. 8 is a diagram depicting a structure of an ELR packet 850 and various examples of schemes 810, 820, 830, 840 for encoding, modulating and transmitting the ELR packet 850 to obtain a target data rate, according to one or more implementations. The ELR packet 850 may be a physical layer protocol data unit (PPDU) including a legacy preamble 851, an ELR preamble 852, and a data payload 853. The legacy preamble 851 may be a WLAN-compatible (e.g., IEEE 802.1 1be-compatible) preamble. The ELR preamble 852 may be used for detection of ERL packets (e.g., by containing a particular sequence of bit values). The data payload 853 may be processed to achieve a target data rate (e.g., target rate of 1Mbps or within a 20% range of 1Mbps) using various schemes. Such schemes may include a scheme 810, a scheme 820, a scheme 830, and a scheme 840. The scheme 810 may include encoding using a forward error correction (FEC) code with a data rate of 2/3 (810-1), concatenating the FEC code with a repetition code with a data rate of 1/2 (810-2), modulating using QPSK (810-3), channel modulating using OFDM (810-4), and/or transmitting using the defined/allocated/designed/configured RU26 or dRU26 (810-5) over an OFDMA channel. The scheme 820 may include encoding using an FEC code with a data rate of 2/3 (820-1), concatenating the FEC code with a repetition code with a data rate of 1/2 (820-2), modulating using BPSK (820-3), channel modulating using OFDM (820-4), and/or transmitting using the defined/allocated/designed/configured RU52 or dRU52 (820-5) over an OFDMA channel. The scheme 830 may include encoding using an FEC code with a data rate of 1/3 (830-2), modulating using BPSK (830-3), channel modulating using OFDM (830-4), and/or transmitting using the defined/allocated/designed/configured RU52 or dRU52 (830-5) over an OFDMA channel. The scheme 840 may include encoding using an FEC code with a data rate of 1/3 (840-2), modulating using QPSK (840-3), channel modulating using OFDM (840-4), and/or transmitting using the defined/allocated/designed/configured RU26 or dRU26 (840-5) over an OFDMA channel.

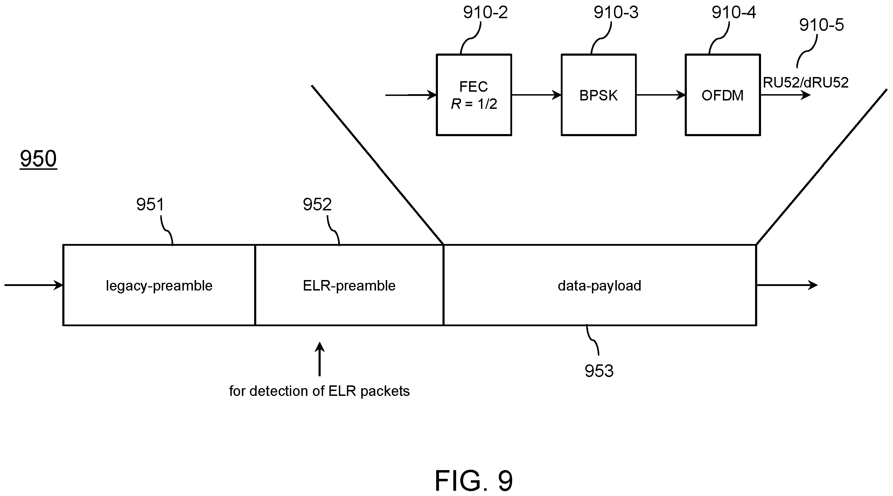

FIG. 9 is a diagram depicting a structure of an ELR packet 950 and an example of schemes 910 for encoding, modulating and transmitting the ELR packet 950 to obtain a target data rate, according to one or more implementations. The ELR packet 950 may be a PPDU including a legacy preamble 951, an ELR preamble 952, and a data payload 953. The legacy preamble 951 may be a WLAN-compatible (e.g., IEEE 802.11be-compatible) preamble. The ELR preamble 952 may be used for detection of ERL packets (e.g., by containing a particular sequence of bit values). The data payload 953 may be processed to achieve a target data rate (e.g., target rate of 1.5Mbps or within a 20% range of 1Mbps) using various schemes, e.g., scheme 910. The scheme 910 may include encoding using an FEC code with a data rate of 1/2 (910-2), modulating using BPSK (910-3), channel modulating using OFDM (910-4), and/or transmitting using the defined/allocated/designed/configured RU52 or dRU52 (910-5) over an OFDMA channel.

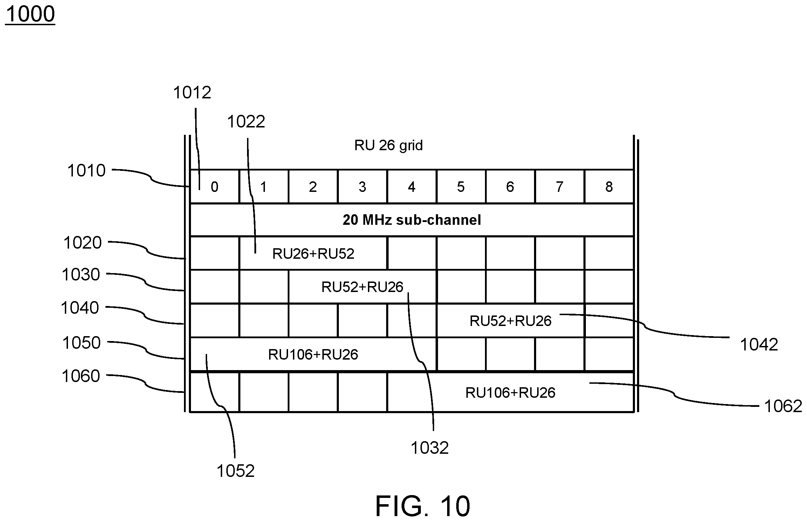

FIG. 10 is a diagram depicting an allocation structure 1000 of resource units (RUs) in a bandwidth of 20 MHz, according to one or more implementations. A 20 MHz channel can be divided into multiple RUs, each including a number of subcarriers (or tones). For example, 256 tones of the 20 MHz chancel can be allocated/grouped into (1) RUs including 26 tones (referred to as "RU26s"), (2) RUs including 52 tones (referred to as "RU52s"), or (3) RUs including 106 tones (referred to as "RU106s"). FIG. 4 shows different RU allocation structures 1010, 1020, 1030, 1040, 1050 and 1060 in a bandwidth of 20 MHz. For example, the RU allocation structure 1010 may include 9 RU26s (e.g., RU26 1012); the RU allocation structure 1020 may include 6 RU26s and a combination of RU26 and RU52 (e.g., RU 1022); the RU allocation structure 1030 may include 6 RU26s and a combination of RU52 and RU26 (e.g., RU 1032); the RU allocation structure 1040 may include 4 RU26s and a combination of RU106 and RU26 (e.g., RU 1042); the RU allocation structure 1050 may include 4 RU26s and a combination of RU106 and RU26 (e.g., RU 1052).

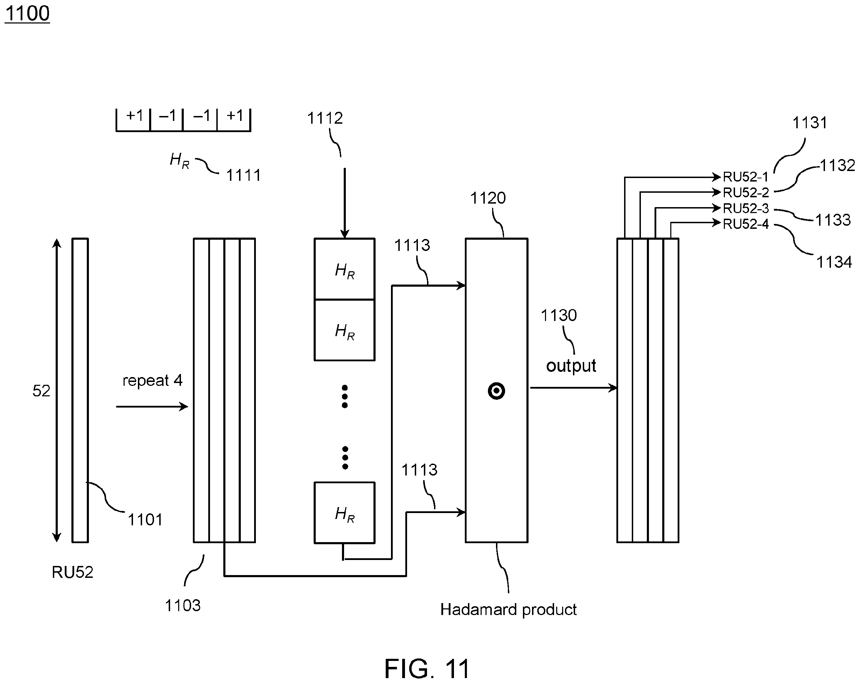

FIG. 11 is a diagram depicting a structure 1100 of repeating RUs in a bandwidth of 20 MHz, according to one or more implementations. A system can repeat an RU (e.g., RU52 1101) four times to produce repeated RUs 1103 which is a vector having four RU52s as elements. In some implementations, a vector $H_R$ 1111 can be defined such that each element of the vector represents a phase shift of input signal (e.g., input signal corresponding to an RU52). For example, $H_R = [+1\ -1\ -1\ +1]$ may represents phase shifts of +90°, -90°, -90°, +90°. In some implementations, a system may receive a stream of vectors $H_R$ 1112, select one of the stream of vectors $H_R$ 1112 (e.g., $H_R$ 1113) and perform a Hadamard product (e.g., element-wise multiplication) on the selected $H_R$ (e.g., $H_R$ 1113) and the RU52 vector 1103. As a result of the Hadamard product, the system may generate an output 1130 which includes RU52-1 (1131), RU52-2 (1132), RU52-3 (1133), and RU52-4 (1134) which correspond to the RU52 (RU52 1101) phase shifted by +90°, -90°, -90°, +90°, respectively.

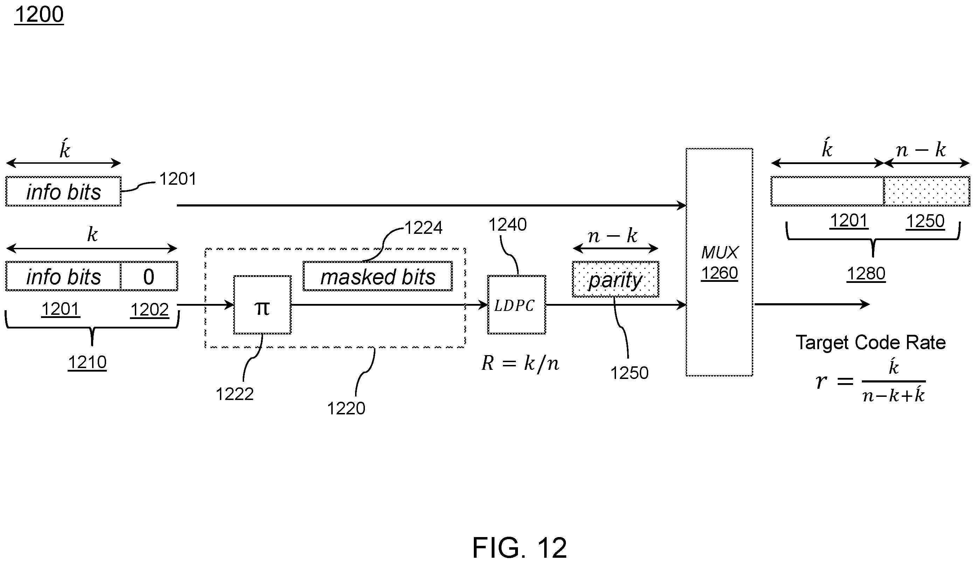

FIG. 12 is a diagram depicting an example encoder 1200 for encoding with a shortened LDPC code to obtain a particular code rate (e.g., target code rate r), according to one or more embodiments. The encoder 1200 may include an LDPC encoder 1240, an information bits optimizer 1220, and/or a MUX 1260. The encoder 1200 and each component thereof may be implemented using circuitry, firmware and/or software. For example, the encoder 1200 may be implemented in the encoder 130 of the communication system 105. The LDPC encoder 1240 may take a block of k bits of information bits and produce n coded bits (or codeword or coded block) with the code rate R=k/n.

Referring to FIG. 12, the information bits optimizer 1220 may include a bit permutation pattern or permutation pattern 1222 (denoted by Π) and/or masked bits 1224 (or bitmask). The permutation pattern 1222 may define or indicate how input bits can be permutated. The permutation pattern 1222 and/or the masked bits 1224 may be chosen a priori. The permutation pattern 1222 and/or the masked bits 1224 may be stored in memory. Given k information bits, the permutation pattern 1222 may define, indicate, or store an index to one permutation of all permutations of k information bits (e.g., an index to one permutation of all k! permutations). For example, the permutation pattern 1222 may indicate one of 1, 2, ..., k!, each of which indicates a permutation of k information bits. The bitmask 1224 may be an array of bits whose size is equal to k information bits such that each bit of the bitmask indicates whether to keep or clear the corresponding bit of the k information bits. The information bits optimizer 1220 may be configured to perform bitwise or bit operations (e.g., NOT, AND, OR, XOR, shift, swap, etc.) to perform permutation (using the permutation pattern Π) and/or bitmasking (using the bitmask) on the k information bits.

The encoder 1200 may obtain data of coded bit error rate (BER) and/or frame error probability (FEP; from past measurements or simulations for example), and determine, based on the bit error rates and/or frame error probability and prior to generating LDPC codes, the permutation pattern 1222 and/or the bitmask 1224. Here, the coded bit error rate (BER) refers to a number of coded bit errors per unit time where the number of coded bit errors refers to a number of received coded bits of a data stream that have been altered due to errors (e.g., noise, interference, distortion or any other bit errors). The bit error probability (FEP) refers to an expected value (e.g., mean, or weighted average) of a bit error ratio, where the bit error ratio refers to a number of bit errors divided by the total number of transferred bits during a certain time interval. The encoder 1200 may determine the permutation pattern 1222 to reduce the BER or FEP (e.g., by permuting particular bits that are highly affected by BER or FEP). The encoder 1200 may determine the bitmask 1224 to reduce the BER or FEP (e.g., by clearing particular bits that are highly affected by BER or FEP).

The encoder 1200 can monitor data streams (e.g., transmission of digitally encoded signals) over a communication channel, determine or measure a coded BER and/or an FEP from the monitored data streams, and use the measured coded BER and/or an FEP to dynamically determine the permutation pattern 1222 and/or the bitmask 1224. The encoder 1200 can be tunable to set the permutation pattern 1222 and/or the bitmask 1224 to different pattern/bitmasking values.

The encoder 1200 may receive/determine/identify a desired code rate (or target code rate) denoted by r (e.g., r=1/3) and a (base) code rate of a base LDPC code (e.g., R=1/2). The encoder 1200 may first determine a target code rate r and then determine, based on the target code rate r, a base code rate R (or one or more base code rates). Alternatively, the encoder 1200 may first determine a base code rate R and then determine, based on the base code rate R, a target code rate r (or one or more target code rates).

The encoder 1200 may determine, based on the base code rate (e.g., R=1/2), values of k and n (e.g., k=822, n=1944). The base LDPC code may have (or be associated with) a code rate R, a codeword length (or coded block length) n, and an information bits size k (e.g., n=648,1296,1944,3888 if the base code is chosen from the 802.11n-be standards).

The encoder 1200 may determine a parameter of $\acute{k}$ indicating the size of information bits ($\acute{k} < k$; e. g., $\acute{k} = 486$) for the target rate r (e.g., r=1/3). The parameter $\acute{k}$ may be chosen a priori for a target rate r. The encoder 1200 may determine the value of $\acute{k}$ using the following equation: [00128]

$$\acute{k} = \text{r} * \frac{1-\text{R}}{1-\text{r}} \ldots\ldots\ldots\ldots \text{(Equation 16)}.$$

The encoder 1200 may determine a parameter of $\acute{n}$ indicating a coded block length (or codeword size; e.g., $\acute{n}$ =1458) for the target rate r (e.g., r=1/3). The encoder 1200 may determine the value of $\acute{n}$ using the following equation:

$$\acute{n} = \text{n} * \frac{1-\text{R}}{1-\text{r}} \ldots\ldots\ldots\ldots \text{(Equation 17)}.$$

. The encoder 1200 may determine a parameter of ($k - \acute{k}$) indicating a frozen block length or a size of one or more bits added to the $\acute{k}$ information bits ($k - \acute{k} = 486$) for the target rate r (e.g., r=1/3). The encoder 1200 may determine the parameter ($k - \acute{k}$) using the following equation:

$$(k - \acute{k}) = \frac{\text{R}-\text{r}}{1-\text{r}} \ldots\ldots\ldots\ldots \text{(Equation 18)}.$$

With the parameters determined above (e.g., $\acute{k}$, $\acute{n}$ ), the target rate r can be calculated using the following equation:

$$r = \frac{\acute{k}}{\acute{n}} = \frac{\acute{k}}{n-k+\acute{k}} \cdots\cdots\cdots \text{ (Equation 19).}$$

The encoder 1200 may calculate/compute/obtain possible combinations of parameters (e.g., r, R, $\acute{n}$, $\acute{k}$) using Equation 16 to Equation 19 (such that $\acute{n}$, $\acute{k}$ should be integer values), store the resulting parameter combinations in memory (e.g., in the form of look-up table (LUT)) as shown in Table 1, and determine parameters by selecting a parameter combination from the LUT. Using Table 1, the encoder 1200 can first determine a target code rate r and then determine/select/choose, based on the target code rate r, one or more base code rates R. The encoder 1200 can first determine a base code rate R and then determine, based on the base code rate R, one or more target code rates.

The encoder 1200 may receive $\acute{k}$ information bits 1201 for the target code rate r. Next, the encoder 1200 may add $(k - \acute{k})$ bits 1202 to the $\acute{k}$ information bits at the end thereof to form/generate k information bits 1210 for the base code rate R. The added $(k - \acute{k})$ bits 1202 may be zero (e.g., $(k - \acute{k})$ number of binary zeros). The added $(k - \acute{k})$ bits 1202 may include one or more binary ones.

In response to adding $(k - \acute{k})$ bits 1202 to the $\acute{k}$ information bits 1201, the information bits optimizer 1220 may receive the resulting k information bits 1210, perform at least one of permutation using the permutation pattern $\Pi$ (1222) or bitmasking using the bitmask 1224, and generate optimized k information bits. The encoder 1200 may control the information bits optimizer 1220 to dynamically turn on or off, thereby selectively skipping permutation and/or bitmasking for simplicity without overly compromising the performance of the resulting code. The encoder 1200 may determine a degree of coded BER or FEP is less than a threshold, and turn off the information bits optimizer 1220 to skip permutation and bitmasking.

In response to the information bits optimizer 1220 generating the optimized k information bits (or in response to adding $(k - \acute{k})$ bits 1202 to the $\acute{k}$ information bits 1201 if the information bits optimization is skipped), the LDPC encoder may receive k information bits, and encode the k information bits to generate k encoded bits (not shown) and $(n-k)$ parity bits 1250. In response to generating the $(n-k)$ parity bits 1250, the MUX 1260 may receive, as two inputs, the k information bits 1201 and the $(n-k)$ parity bits 1250, and generate/output $(n - k + \acute{k})$ bits 1280 by concatenating (or combining, merging, integrating, consolidating) the $\acute{k}$ information bits 1201 and the $(n-k)$ parity bits 1250. The output $(n - k + \acute{k})$ bits 1280 may correspond to a codeword for the LDPC code with target rate r. In other words, the encoder 1200 can encode the $\acute{k}$ information bits 1201 to generate the $(n - k + \acute{k})$ encoded bits 1280 (or a codeword) such that the code rate of the encoder

$$r = \frac{\acute{k}}{n-k+\acute{k}}$$

1200 corresponds to (Equation 19).

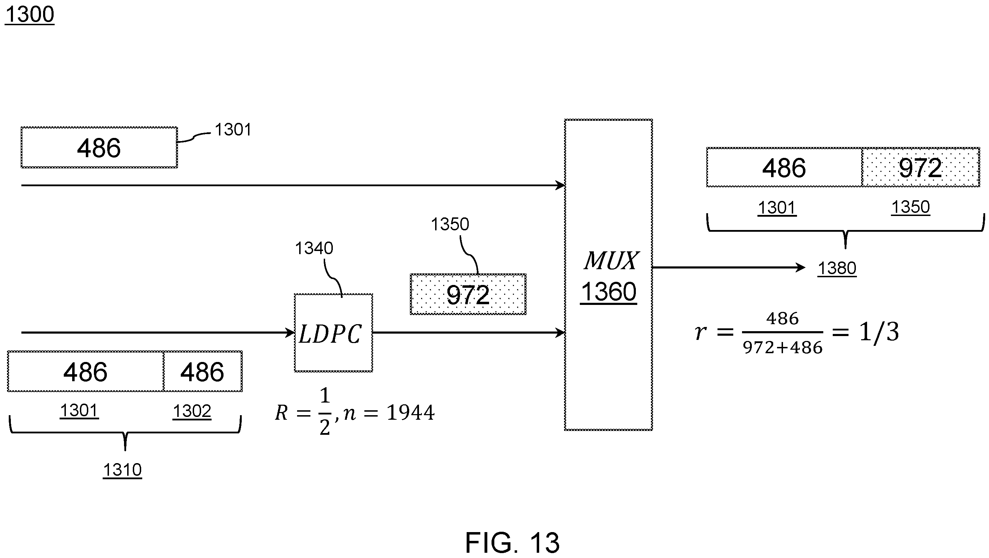

FIG. 13 is a diagram depicting an example encoder 1300 for encoding with a shortened LDPC code to obtain a particular code rate (e.g., target code rate $r$=1/3), according to one or more embodiments. Referring to FIG. 13, the encoder 1300 may receive $\acute{k}$ information bits 1301 (e.g., 486 information bits), and add $(k-\acute{k})$ bits 1302 (e.g., 486 bits 1302) to the $\acute{k}$ information bits 1301 to generate k information bits 1310 (e.g., 972 information bits). An LDPC encoder 1340 may receive the 972 information bits 1310 and produce n encoded bits (e.g., 1944 encoded bits) including 972 parity bits 1350, according to the base code rate R=1/2. A MUX 1360 may concatenate the 486 information bits 1301 and the 972 parity bits 1350 to produce (1458=486+972) encoded bits 1380. In other words, the encoder 1300 can encode 486 information bits 1301 to generate 1458 encoded bits 1380 (or a codeword) such that the code rate $r$ of the encoder 1300 corresponds to

$$\frac{1}{3} = \frac{486}{1458}$$

.

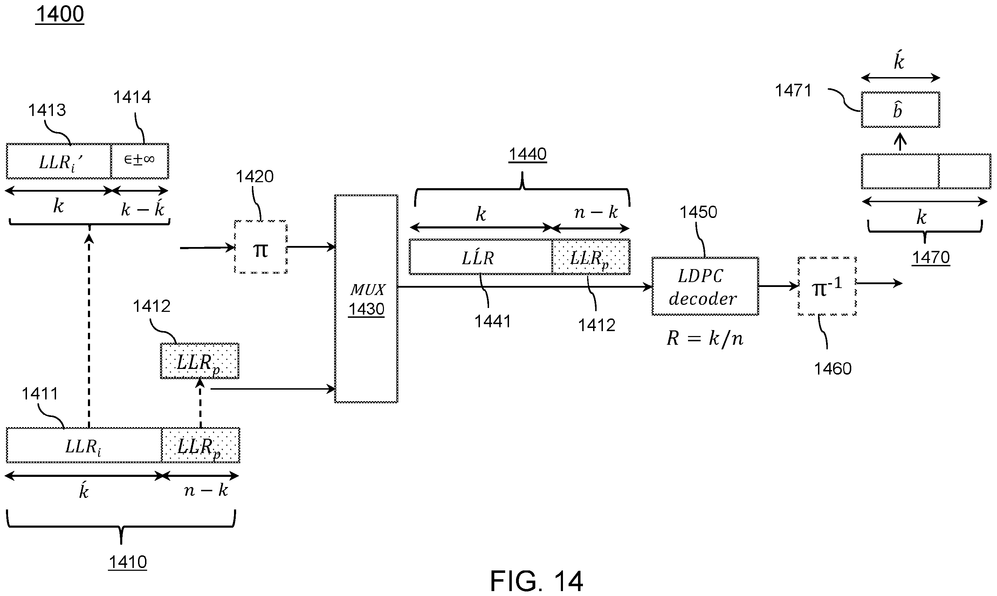

FIG. 14 is a diagram depicting an example decoder 1400 for decoding with a shortened LDPC code according to one or more embodiments. The decoder 1400 may include an LDPC decoder 1450, a LLR values optimizer 1420, a multiplexer (MUX) 1430, and/or a bits de-optimizer (or inverse optimizer) 1460. The decoder 1400 and each component thereof may be implemented using circuitry, firmware and/or software. For example, the decoder 1400 may be implemented in the decoder 160 of the communication system 108. In response to the communication system 105 transmitting encoded bits produced by the encoder 1200, the communication system 108 may receive the transmitted encoded bits and the decoder 1400 of the communication system 108 may decode LLR values corresponding to the transmitted encoded bits (e.g., LLR values 1410). The LDPC decoder 1450 may take a block of n encoded bits and produce k decoded bits (or decoded information bits) with the code rate R=k/n.

Referring to FIG. 14, the LLR values optimizer 1420 may have configuration similar to the information bits optimizer in the encoder 1200. For example, the LLR values optimizer 1420 may be configured to perform permutation (using a permutation pattern $\Pi$) and/or bitmasking (using a bitmask) on input LLR values (e.g., k LLR values). The bits de-optimizer 1460 may be configured to perform an inverse operation of the information bits optimizer (e.g., information bits optimizer 1220) in the corresponding encoder (e.g., encoder 1200).

The decoder 1400 may receive $(n - k + \acute{k})$ log likelihood ratio (LLR) values 1410 including $\acute{k}$ LLR values 1411 (corresponding to $\acute{k}$ information bits) and $(n-k)$ LLR values 1412 (corresponding to $(n-k)$ parity bits). The decoder 1400 may obtain/extract, from the $\acute{k}$ LLR values 1411, $k$ LLR values 1413 by removing $(k - \acute{k})$ LLR values 1414 at the end of the $\acute{k}$ LLR values 1411. The removed $(k - \acute{k})$ LLR values 1414 may correspond to the $(k - \acute{k})$ bits 1202 (e.g., $(k - \acute{k})$ zeros) added to the $\acute{k}$ information bits 1201 by the corresponding encoder 1200.

The decoder 1400 may generate, by the LLR values optimizer 1420, $k$ optimized LLR values. The decoder 1400 may turn off the LLR values optimizer 1420 to skip permutation and bitmasking.

In response to the LLR values optimizer 1220 generating the optimized $k$ optimized LLR values 1441 (or in response to extracting, from the $k$ LLR values 1411, $k$ LLR values 1413 if the LLR values optimization is skipped), the MUX 1430 may receive, as two inputs, the $k$ (optimized) LLR values 1441 and the $(n-k)$ LLR values 1412, and generate/output $n$ LLR values 1440 by concatenating (or combining, merging, integrating, consolidating) the $k$ LLR values 1441 and the $(n-k)$ LLR values 1412.

The LDPC decoder 1450 may receive the $n$ LLR values 1440 as an output from the MUX 1430, and decode the $n$ LLR values 1440 to generate $k$ information bits. In response to determining that the corresponding encoder 1200 has performed the information bits optimization, the bits de-optimizer 1460 may be configured to receive the $k$ information bits from the LDPC decoder 1450, and perform, based on the permutation pattern $\Pi$ (1222) or the bitmask (1224) in the encoder 1200, bitwise or bit operations to perform an inverse permutation and/or inverse bitmasking on input bits (e.g., $k$ information bits). If the corresponding encoder 1200 does not perform the information bits optimization, the decoder 1400 may not perform the inverse bits optimization (e.g., by turning off the bits de-optimizer).

In some implementations, in response to the bits de-optimizer 1460 generating the de-optimized $k$ information bits 1470 (or in response to the LDPC decoder 1450 generating the $k$ information bits if the corresponding encoder 1200 does not perform the information bits optimization), the decoder 1400 may extract, from the $k$ information bits 1470, $\acute{k}$ information bits 1471 at the start of the $k$ information bits 1470, and output the $\acute{k}$ information bits 1471. The outputted $\acute{k}$ information bits 1471 may correspond to information bits for the LDPC code with target rate r. In other words, the decoder 1400 can decode the $(n - k + k)$ LLR values 1410 to generate the $\acute{k}$ information bits 1471 such that the code rate of the decoder 1400 corresponds to

$$ r = \frac{\acute{k}}{n-k+\acute{k}} \text{ (Equation 19).} $$

.

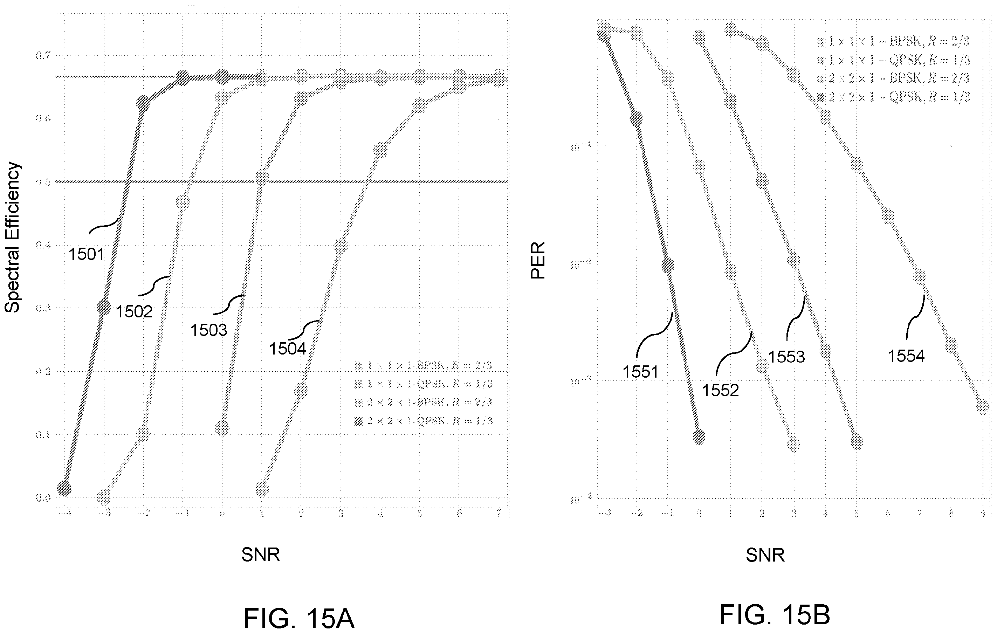

FIG. 15A and FIG. 15B are diagrams depicting example simulation results using a system to obtain a target data rate on a channel with (1) LDPC codes, (2) DNLOS signal propagation (e.g., a 802.11 MIMO channel model type D which is non-line of sight) and (3) the number of spatial streams equal to 1 (Nss=1), according to one or more embodiments. Referring to FIG. 15A, lines 1501, 1502, 1503, 1504 correspond to simulation results (SpecEff vs SNR) using modulation configurations of (1) 2x2 MIMO, QPSK, R=1/3, (2) 2x2 MIMO, BPSK, R=2/3, (3) 1x1 SISO, QPSK, R=1/3, and (4) 1x1 SISO, BPSK, R=2/3, respectively. SpecEff refers to an information rate (or bit rate or effective data rate) over a given bandwidth in a communication system (in the unit of bits/second/Hz). Referring to FIG. 15B, lines 1551, 1552, 1553, 1554 correspond to simulation results (PER vs SNR) using modulation configurations of (1) 2x2 MIMO, QPSK, R=1/3, (2) 2x2 MIMO, BPSK, R=2/3, (3) 1x1 SISO, QPSK, R=1/3, and (4) 1x1 SISO, BPSK, R=2/3, respectively. As shown in FIG. 15A and 15B, the configuration (1) shows the highest spectral efficiency and the least PER.

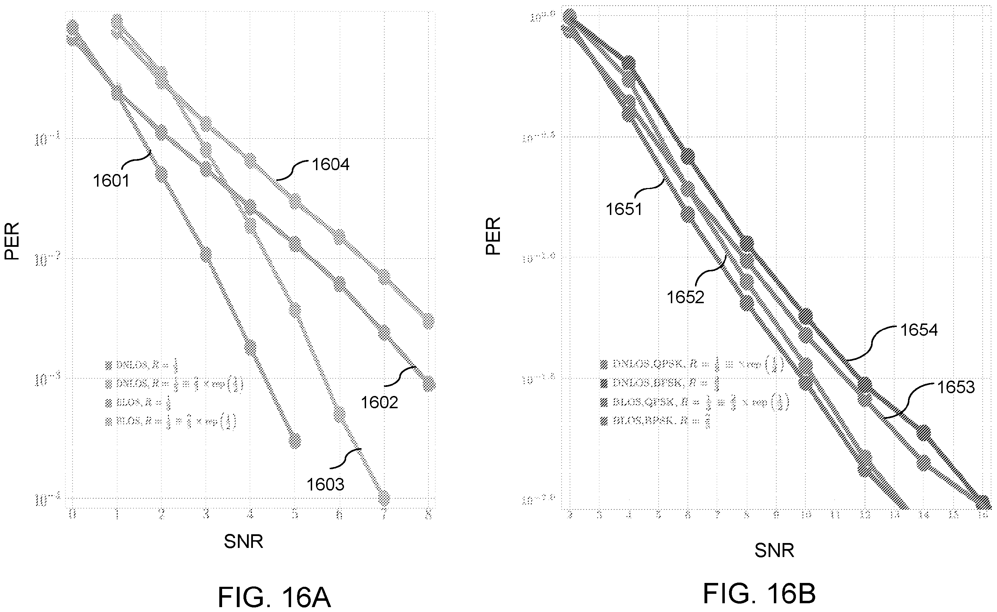

FIG. 16A is a diagram depicting example simulation results using a system to obtain a target data rate on a channel with (1) LDPC codes, (2) QPSK, and (3) 1x1 SISO, according to one or more embodiments. Referring to FIG. 16A, lines 1601, 1602, 1603, 1604 correspond to correspond to simulation results (PER vs SNR) using configurations of (1) native LDPC code with R=1/3 on a DNLOS channel, (2) native LDPC code with R=2/3 concatenated with a repetition code with R=1/2 on a DNLOS channel, (3) native LDPC code with R=1/3 on a BLOS channel (e.g., a 802.11 channel model Type B which is line of sight), (4) native LDPC code with R=2/3 concatenated with a repetition code with R=1/2 on a BLOS channel, respectively. As shown in FIG. 16A, the native codes with R=1/3 have 1dB or more gain over the concatenation codes.

FIG. 16B is a diagram depicting example simulation results using a system to obtain a target data rate on a channel with (1) BCC codes and (2) 1x1 SISO, according to one or more embodiments. Referring to FIG. 16B, lines 1651, 1652, 1653, 1654 correspond to correspond to simulation results (PER vs SNR) using configurations of (1) native BCC code with R=2/3 concatenated with a repetition code with R=1/2 on a DNLOS, QPSK channel (resulting a code rate of 1/3), (2) native BCC code with R=1/3 on a DNLOS, BPSK channel, (3) native BCC code with R=2/3 concatenated with a repetition code with R=1/2 on a BLOS, QPSK channel (resulting a code rate of 1/3), (4) native BCC code with R=1/3 on a BLOS, BPSK channel, respectively. As shown in FIG. 16A, the configuration of QPSK with concatenated BCC code (e.g.,

configuration (1)) and the configuration of BPSK with native BCC code (e.g., configuration (2)) show performance fairly close to each other, although the concatenated BCC code configuration is easier to implement than the native BCC code configuration.

In some implementations, an apparatus (e.g. communication system 105) may include a transmitter (e.g., transmitter circuitry 120) and one or more processors (e.g., processor 2010). The one or more processors may be configured to identify a target data rate (e.g., 1Mbps) for transmitting data. Based at least on the target data rate, the one or more processors may be configured to select a modulation scheme and a code rate to transmit the data within a range of the target data rate. For example, the apparatus can select, based on the target data rate, a modulation scheme and a code rate using Table 1 and Table 2. The one or more processors may be configured to identify, based at least on the selected code rate (e.g., code rate of 1/3), a forward error correction (FEC) code (e.g., LDPC code) with a first code rate (e.g., code rate of 1/2; see FIG. 13) that is different from the selected code rate. The one or more processors may be configured to encode, by an FEC encoder (e.g., LDPC encoder 1340), the data using the FEC code with first code rate to generate encoded data that corresponds to the selected code rate. The one or more processors may be configured to modulate the encoded data using the modulation scheme (e.g., BPSK or QPSK) to generate modulated data. The transmitter may be configured to transmit the modulated data.

In some implementations, the selected FEC code may be a low density parity check (LDPC) code or a binary convolutional (BCC) code. In some implementations, the target data rate may be 1 Mbps or 1.5 Mbps, and the range of the target data rate may be 20% of the target data rate. For example, Table 1 and Table 2 show that a resulting data rate is within 20% of the target data rate (e.g., 1Mbps or 1.5Mbps).

In some implementations, the FEC code may be an LDPC code with the first code rate (e.g., 1/2) that is greater than the selected code rate (e.g., 1/3). In encoding the data, the one or more processors may be configured to receive a first set of information bits (e.g., information bits 1301 in FIG. 13). The one or more processors may be configured to concatenate the first set of information bits with a set of information bits (e.g., set of information bits 1302) to generate a second set of information bits (e.g., set of information bits 1310). The one or more processors may be configured to encode, by the FEC encoder using the LDPC code with the first code rate (e.g., 1/2), the second set of information bits 1310, to generate parity data (e.g., parity data 1350). The one or more processors may be configured to generate the encoded data by concatenating the first set of information bit 1301 and the parity data 1350 to achieve the selected code rate.

In some implementations, the FEC code may be an LDPC code with the first code rate (e.g., 1/2) that is greater than the selected code rate (e.g., 1/3). In encoding the data, the one or more processors may be configured to receive a set of information bits. The one or more processors may be configured to encode, by the FEC encoder, the set of information bits using the LDPC code with the first code rate to generate encoded bits and parity data. The one or more processors may be configured to puncture one or more bits from the parity data to generate punctured parity data. The one or more processors may be configured to generate the encoded data by concatenating the encoded bits and the punctured parity data. For example, Referring to FIG. 7B, the system may discard some parity bits (e.g., "punctured bits" 741) after encoding. In this manner, the system can increases the effective code rate and degrade a coding gain

In some implementations, the FEC code may be a first BCC code with the first code rate (e.g., 2/3) that is greater than the selected code rate (e.g., 1/3). In encoding the data, the one or more processors may be configured to concatenate the first BCC code with the first code rate with a repetition code (e.g., a native 2/3 BCC code concatenated with a 1/2 repetition code; see Table 2) to generate a second BCC code that corresponds to the selected code rate (e.g., 1/3). The one or more processors may be configured to encode, by the FEC encoder, the data using the second BCC code, to generate the encoded data that corresponds to the selected code rate.

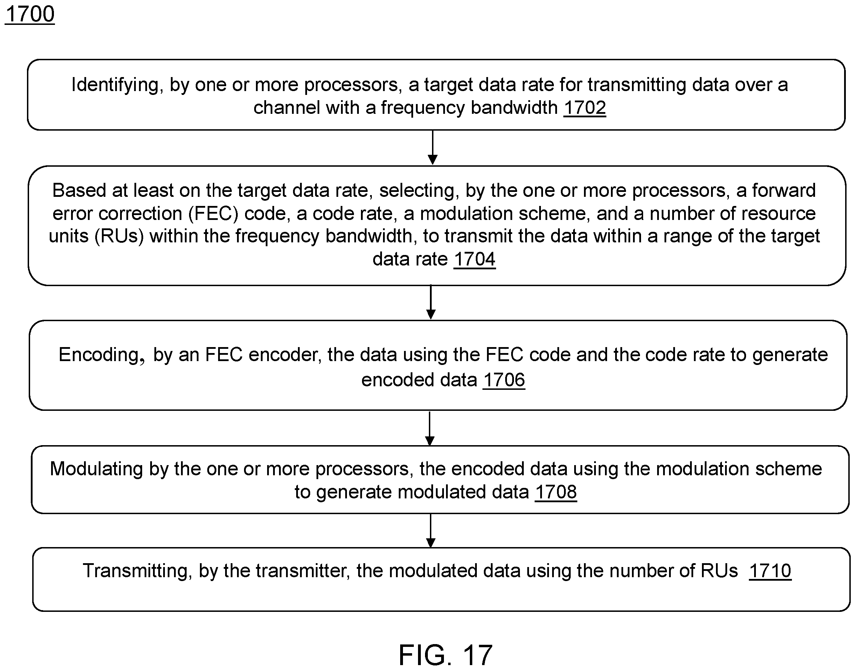

FIG. 17 is a flow diagram showing a process 1700 for obtaining a particular data rate using various schemes of encoding, modulation and/or transmitting, in accordance with an embodiment. In some implementations, the process 1700 for wireless communications over one or more channels is performed by one or more processors of a system (e.g. processor 2010 of communication system 105, transmitter circuitry 120, baseband circuitry 110, encoder 130). In other embodiments, the process 1700 is performed by other entities (e.g., a computing system other than the communication system 105). In some implementations, the process 1700 includes more, fewer, or different steps than shown in FIG. 17.

At step 1702, the one or more processors of the system may identify a target data rate (e.g., 1Mbps or 1.5Mbps) for transmitting data over a channel with a frequency bandwidth (e.g., 20MHz).

At step 1704, based at least on the target data rate, the one or more processors may select a forward error correction (FEC) code, a code rate, a modulation scheme, and a number of resource units (RUs) within the frequency bandwidth, to transmit the data within a range of the target data rate. For example, based on the target data rate (e.g., 1Mbps or 1.5Mbps), the apparatus can select a code rate, a modulation scheme, and a number of RUs using Table 1 or Table 2. In some implementations, the target data rate may be 1 Mbps or 1.5 Mbps, and the range of the target data rate may be 20% of the target data rate. For example, Table 1 and Table 2 show that a resulting data rate is within 20% of the target data rate (e.g., 1Mbps or 1.5Mbps).

In some implementations, the method may include based at least on the target data rate, selecting a guard interval (GI) and a number of tones per RU, to transmit the data within a range of the target data rate. For example, based on the target data rate (e.g., 1Mbps or 1.5Mbps), the apparatus can select a GI, and a number of RUs using Table 1 or Table 2.

At step 1706, the one or more processors may encode, by an FEC encoder, the data using the FEC code and the code rate to generate encoded data. In some implementations, the selected FEC code may be a low density parity check (LDPC) code or a binary convolutional (BCC) code. In some implementations, the FEC code may have a first code rate that is different from the selected code rate. The method may include encoding, by the FEC encoder, the data using the FEC code with the first code rate to generate encoded data that corresponds to the selected code rate. For example, referring to FIG. 13, the LDPC encoder 1340 can encode data using an LDPC code with a code rate of 1/2 to generate encoded data that corresponds to the selected code rate of 1/3.

In some implementations, the FEC code may be an LDPC code, the selected code rate may be 1/3, and the first code rate may be 1/2 or 1/4 (see Table 1). In some implementations, the FEC code may be a BCC code, the selected code rate may be 1/3, and the first code rate may be 2/3 (see Table 2).

At step 1708, the one or more processors may modulate the encoded data using the modulation scheme (e.g., BPSK or QPSK) to generate modulated data.

At step 1710, a transmitter of the system may transmit the modulated data using the number of RUs (e.g., RU26, RU52, RU106, a combination of RU26 and RU52, a combination of RU26 and RU106 as shown in FIG. 10).

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

**Claims**

1. An apparatus (105) comprising:

   a transmitter (120) and one or more processors (2010), wherein
   the one or more processors (2010) are configured to:

   identify a target data rate for transmitting data over a channel with a frequency bandwidth;
   based at least on the target data rate, select a forward error correction, FEC, code, a code rate, a modulation scheme, and a number of resource units, Rus, within the frequency bandwidth, to transmit the data within a range of the target data rate;
   encode, by an FEC encoder (1340), the data using the FEC code and the code rate to generate encoded data; and
   modulate the encoded data using the modulation scheme to generate modulated data, and

   the transmitter (120) is configured to transmit the modulated data using the number of RUs.

2. The apparatus (105) according to claim 1, wherein
the selected FEC code is a low density parity check, LDPC, code or a binary convolutional, BCC, code.

3. The apparatus (105) according to claim 1 or 2, wherein the one or more processors (2010) are further configured to:
based at least on the target data rate, select a guard interval, GI, and a number of tones per RU, to transmit the data within a range of the target data rate.

4. The apparatus (105) according to any of claims 1 to 3, wherein

the target data rate is 1 Mbps or 1.5 Mbps, and
the range of the target data rate is 20% of the target data rate.

5. The apparatus (105) according to any of claims 1 to 4, wherein

the FEC code has a first code rate that is different from the selected code rate,
the one or more processors (2010) are further configured to:
encode, by the FEC encoder (1340), the data using the FEC code with the first code rate to generate encoded data that corresponds to the selected code rate.

6. The apparatus (105) according to any of claims 1 to 5, wherein

the FEC code is an LDPC code,
the selected code rate is 1/3, and
the first code rate is 1/2 or 1/4.

7. The apparatus (105) according to any of claims 1 to 6, wherein

the FEC code is a BCC code,
the selected code rate is 1/3, and
the first code rate is 2/3.

8. A method, comprising:

identifying, by one or more processors (2010), a target data rate for transmitting data over a channel with a frequency bandwidth;
based at least on the target data rate, selecting, by the one or more processors (2010), a forward error correction, FEC, code, a code rate, a modulation scheme, and a number of resource units, Rus, within the frequency bandwidth, to transmit the data within a range of the target data rate;
encoding, by an FEC encoder (1340), the data using the FEC code and the code rate to generate encoded data; and
modulating by the one or more processors (2010), the encoded data using the modulation scheme to generate modulated data, and
transmitting, by the transmitter (120), the modulated data using the number of RUs.

9. The method according to claim 8, wherein
the selected FEC code is a low density parity check, LDPC, code or a binary convolutional, BCC, code.

10. The method according to claim 8 or 9, comprising at least one of the following features:

i) further comprising:
based at least on the target data rate, selecting a guard interval, GI, and a number of tones per RU, to transmit the data within a range of the target data rate;
ii) wherein

the target data rate is 1 Mbps or 1.5 Mbps, and
the range of the target data rate is 20% of the target data rate.

11. The method according to any of claims 8 to 10, comprising at least one of the following features:

i) wherein

the FEC code has a first code rate that is different from the selected code rate,
the method comprises:
encoding, by the FEC encoder (1340), the data using the FEC code with the first code rate to generate encoded data that corresponds to the selected code rate;

ii) wherein

the FEC code is an LDPC code,
the selected code rate is 1/3, and
the first code rate is 1/2 or 1/4;

iii) wherein

the FEC code is a BCC code,
the selected code rate is 1/3, and
the first code rate is 2/3.

12. An apparatus (105) comprising:

a transmitter (120) and one or more processors (2010), wherein
the one or more processors (2010) are configured to:

identify a target data rate for transmitting data;
based at least on the target data rate, select a modulation scheme and a code rate to transmit the data within a range of the target data rate;
identify, based at least on the selected code rate, a forward error correction, FEC, code with a first code rate that is different from the selected code rate;
encode, by an FEC encoder (1340), the data using the FEC code with first code rate to generate encoded data that corresponds to the selected code rate; and
modulate the encoded data using the modulation scheme to generate modulated data, and

the transmitter (120) is configured to transmit the modulated data.

13. The apparatus (105) according to any of claims 1 to 7 or 12, wherein
the selected FEC code is a low density parity check, LDPC, code or a binary convolutional, BCC, code.

14. The apparatus (105) according to any of claims 1 to 7 or 12 to 13, wherein

the target data rate is 1 Mbps or 1.5 Mbps, and
the range of the target data rate is 20% of the target data rate.

15. The apparatus (105) according to any of claims 1 to 7 or 12 to 14, comprising at least one of the following features:

i) wherein

the FEC code is an LDPC code with the first code rate that is greater than the selected code rate;
in encoding the data, the one or more processors (2010) are configured to:

receive a first set of information bits;
concatenate the first set of information bits with a set of information bits to generate a second set of information bits;
encode, by the FEC encoder (1340) using the LDPC code with the first code rate, the second set of information bits, to generate parity data; and
generate the encoded data by concatenating the first set of information bit and the parity data to achieve the selected code rate;

ii) wherein

the FEC code is an LDPC code with the first code rate that is greater than the selected code rate;
in encoding the data, the one or more processors (2010) are configured to:

receive a set of information bits;
encode, by the FEC encoder (1340), the set of information bits using the LDPC code with the first code rate to generate encoded bits and parity data;
puncture one or more bits from the parity data to generate punctured parity data; and
generate the encoded data by concatenating the encoded bits and the punctured parity data;

iii) wherein

the FEC code is a first BCC code with the first code rate that is greater than the selected code rate;
in encoding the data, the one or more processors (2010) are configured to:

concatenate the first BCC code with the first code rate with a repetition code to generate a second BCC code that corresponds to the selected code rate; and
encode, by the FEC encoder (1340), the data using the second BCC code, to generate the encoded data that corresponds to the selected code rate.

100

105

Baseband
Circuitry 110

Encoder 130

115

Transmitter
Circuitry
120

125

108

Baseband
Circuitry 150

Decoder 160

145

Receiver
Circuitry
140

FIG. 1

**FIG. 2**

Computing system 2000

Cache 2020 — Processor 2010 — I/O Components 2050

Display 2070

Input Device 2080

Communication System 2040

Memory 2060

Network Interface Device 2030

EP 4 611 292 A1

300

24(1 − R) − 1

24R

24(1-R)-1

1

24(1 − R)

A **310**

B **312**

T **314**

C **316**

D **318**

E **320**

**FIG. 3**

**FIG. 4**

EP 4 611 292 A1

FIG. 5

EP 4 611 292 A1

FIG. 6

EP 4 611 292 A1

700

Data bits → | Data bits | 0..0 | → encode | Data bits | 0..0 | Parity bits | → discard | Data bits | Parity bits |

701

702

**FIG. 7A**

EP 4 611 292 A1

740

| Data bits | Parity bits | → discard | Data bits | Parity bits | |

741

**FIG. 7B**

780

| Data bits | | → copy | Data bits | | |

781

**FIG. 7C**

810-1     810-2     810-3     810-4     810-5

| FEC $R = 2/3$ | → | REP $R = 1/2$ | → | QPSK | → | OFDM | RU26/dRU26 |

820-1     820-2     820-3     820-4     820-5

| FEC $R = 2/3$ | → | REP $R = 1/2$ | → | BPSK | → | OFDM | RU52/dRU52 |

830-2     830-3     830-4     830-5

| → | FEC $R = 1/3$ | → | BPSK | → | OFDM | RU52/dRU52 |

840-2     840-3     840-4     840-5

| → | FEC $R = 1/3$ | → | QPSK | → | OFDM | RU26/dRU26 |

850

| 851 | 852 | |
| legacy-preamble | ELR-preamble | data-payload |

↑
for detection of ELR packets

853

FIG. 8

910-2          910-3          910-4          910-5

┌─────────┐   ┌─────────┐   ┌─────────┐
│   FEC   │   │         │   │         │   RU52/dRU52
→│ R = 1/2 │→ │  BPSK   │→ │  OFDM   │→
└─────────┘   └─────────┘   └─────────┘

950

951              952

┌──────────────────┬──────────────────┬──────────────────────────────┐
│                  │                  │                              │
→│ legacy-preamble  │   ELR-preamble   │         data-payload         │→
│                  │                  │                              │
└──────────────────┴──────────────────┴──────────────────────────────┘
                          ↑                        953
              for detection of ELR packets

FIG. 9

1000

FIG. 10

FIG. 11

EP 4 611 292 A1

1200

info bits

info bits 1201

0 1202

1210

π 1222

1220

masked bits 1224

LDPC 1240

$R = k/n$

parity 1250

MUX 1260

1201 1280 1250

Target Code Rate

$$r = \frac{\acute{k}}{n-k+\acute{k}}$$

FIG. 12

FIG. 13

FIG. 14

FIG. 15B

FIG. 15A

FIG. 16B

FIG. 16A

1700

Identifying, by one or more processors, a target data rate for transmitting data over a channel with a frequency bandwidth 1702

Based at least on the target data rate, selecting, by the one or more processors, a forward error correction (FEC) code, a code rate, a modulation scheme, and a number of resource units (RUs) within the frequency bandwidth, to transmit the data within a range of the target data rate 1704

Encoding, by an FEC encoder, the data using the FEC code and the code rate to generate encoded data 1706

Modulating by the one or more processors, the encoded data using the modulation scheme to generate modulated data 1708

Transmitting, by the transmitter, the modulated data using the number of RUs 1710

FIG. 17

## EUROPEAN SEARCH REPORT

**Application Number**

EP 25 16 0791

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 748 883 A1 (MEDIATEK SINGAPORE PTE LTD [SG]) 9 December 2020 (2020-12-09) * page 7, paragraphs 18,38 * ----- | 1-15 | INV. H04L1/00 H04W84/12 |
| X | US 2023/087449 A1 (LI QINGHUA [US] ET AL) 23 March 2023 (2023-03-23) * paragraphs [0074] - [0087]; figure 12 * ----- | 1-15 | |
| A | US 2003/185309 A1 (PAUTLER JOSEPH J [US] ET AL) 2 October 2003 (2003-10-02) * paragraph [0100] * ----- | 1-15 | |
| A | EP 1 699 139 B1 (SAMSUNG ELECTRONICS CO LTD [KR]) 2 February 2011 (2011-02-02) * paragraph [0024] * ----- | 1-15 | |
| A | WO 01/71963 A2 (TEXAS INSTR SANTA ROSA INC [US]) 27 September 2001 (2001-09-27) * page 7 * ----- | 1-15 | |
| | | | **TECHNICAL FIELDS SEARCHED (IPC)** H04L H04W |

The present search report has been drawn up for all claims

| Place of search | Date of completion of the search | Examiner |
|---|---|---|
| Munich | 10 June 2025 | Flores Sanchez, L |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 0791

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | | | Publication date | Patent family member(s) | | | Publication date |
|---|---|---|---|---|---|---|---|
| EP | 3748883 | A1 | 09-12-2020 | CN | 112039630 | A | 04-12-2020 |
| | | | | EP | 3748883 | A1 | 09-12-2020 |
| | | | | TW | 202046664 | A | 16-12-2020 |
| | | | | US | 2020383133 | A1 | 03-12-2020 |
| US | 2023087449 | A1 | 23-03-2023 | NONE | | | |
| US | 2003185309 | A1 | 02-10-2003 | AU | 2002256079 | A1 | 21-10-2002 |
| | | | | CN | 1502180 | A | 02-06-2004 |
| | | | | EP | 1384335 | A2 | 28-01-2004 |
| | | | | ES | 2539241 | T3 | 29-06-2015 |
| | | | | JP | 4194368 | B2 | 10-12-2008 |
| | | | | JP | 2005509316 | A | 07-04-2005 |
| | | | | KR | 20030085101 | A | 01-11-2003 |
| | | | | US | 2003185309 | A1 | 02-10-2003 |
| | | | | WO | 02082689 | A2 | 17-10-2002 |
| EP | 1699139 | B1 | 02-02-2011 | EP | 1699139 | A2 | 06-09-2006 |
| | | | | KR | 20060097282 | A | 14-09-2006 |
| | | | | US | 2006206781 | A1 | 14-09-2006 |
| WO | 0171963 | A2 | 27-09-2001 | AU | 4764401 | A | 03-10-2001 |
| | | | | TW | 513874 | B | 11-12-2002 |
| | | | | WO | 0171963 | A2 | 27-09-2001 |

EPO FORM P0459

For more details about this annex : see Official Journal of the European Patent Office, No. 12/82

**REFERENCES CITED IN THE DESCRIPTION**

**Patent documents cited in the description**

- US 63560191